# EUROPEAN PATENT SPECIFICATION

(11) **EP 4 423 165 B1**
(45) Date of publication and mention of the grant of the patent: **24.09.2025**
(21) Application number: 22818662.3
(22) Date of filing: 17.11.2022
(51) Int. Cl.: C08G 63/553, C08G 59/54, C08G 63/685, C08G 69/26, C09D 163/00, C09D 11/101, C09D 11/104

(54) **A POLYMER BEING SUITABLE AS INERT COMPONENT OF A RADIATION CURING COATING AND IN PARTICULAR OF A RADIATION CURING INK**
ALS INERTE KOMPONENTE EINER STRAHLUNGSHÄRTENDEN BESCHICHTUNG UND INSBESONDERE EINER STRAHLUNGSHÄRTENDEN TINTE GEEIGNETES POLYMER
POLYMÈRE APPROPRIÉ EN TANT QUE COMPOSANT INERTE D'UN REVÊTEMENT DURCISSABLE PAR RAYONNEMENT ET EN PARTICULIER D'UNE ENCRE DURCISSABLE PAR RAYONNEMENT

(30) Priority: 29.11.2021 EP 21211073
(43) Date of publication of application: 04.09.2024
(73) Proprietor: hubergroup Deutschland GmbH, 85551 Kirchheim-Heimstetten (DE)
(72) Inventor: BACK, Justus, 81829 München (DE); BICER, Taner, 85567 Grafing (DE)
(74) Representative: Henkel & Partner mbB
(86) International application number: PCT/EP2022/082261
(87) International publication number: WO 2023/094257

(56) References cited:
- EP-A1- 3 842 467
- US-A1- 2019 264 044

## Description

The present invention relates to a polymer being suitable as resin component of a radiation curing coating and in particular of a radiation curing ink.

Coatings, i.e. coverings being applied to the surface of an object, are widely used for different purposes, such as for protecting the surface for instance against corrosion, wear and/or humidity, for decorating the surface, for functionalizing the surface for instance by providing electrical conductivity and/or a magnetic response, for providing information such as in the case of newspapers (i.e. printed paper) or printed cardboards or the like. Examples for such coatings are inks, varnishes, wall coatings, floor coatings and the like. Such coatings may be applied onto the substrate as liquid, gas or solid and are then typically dried, hardened or cured, respectively, either by physical drying upon water or solvent evaporation, or by a reaction, such as cross-linking or the like. Depending on the curing mechanism, these coatings are subdivided into temperature curing coatings, humidity curing coatings, oxidatively curing coatings, radiation curing coatings including UV curing coatings and the like. A particular important class of such coatings are radiation curing coatings, which cure upon exposure to radiation.

However, the known radiation curing coatings and in particular radiation curing inks and varnishes are not satisfying in particular with regards to a good adhesion on plastic substrates having a low energy surface, such as polyethylene terephthalate (PET), polyvinyl chloride (PVC), polyethylene (PE), polypropylene (PP) or biaxially oriented polypropylene (BOPP) films. For instance, it is important to minimize the shrinkage and particularly the lateral shrinkage of the coated layer during the curing process to obtain a proper adhesion. The shrinkage occurs during the curing of a coating composition, since the dimensions of the coating composition before and after the curing alter as a consequence of the crosslinking reaction, which is typically a radical polymerization of ethylenic groups. The formation of a covalent bond between the ethylenic groups leads to the shrinkage of the coated layer. The crosslinking density is direct proportional to the observed shrinkage of the material. One approach for reducing the shrinkage of a coated layer, such as a printing ink layer, during the curing process is to include one or more inert resins into the coating, such as a printing ink composition. An inert resin in this connection means a resin, which does not have any ethylenic or polymerizable double bonds that can take part in a radical polymerization reaction initiated for example by a photoinitiator. On account of this reason, upon exposure to radiation, such as UV irradiation, the inert resin does not at all participate in the curing reaction of the other components of the coating composition and thus does not at all contribute to a shrinkage of the coating composition during the curing process so that the total shrinkage of the coating composition during the curing is reduced. An additional advantageous effect of such inert resins is that most of the inert resins improve the mechanical properties of the cured coating composition and thus of the coated substrates. For instance, such an inert resin may increase the flexibility and/or lower the brittleness of the coating composition. Flexibility and elasticity also have a positive impact on the adhesion properties of the coated layer.

Typically, cellulose acetate butyrate (CAB), cellulose acetate propionate, ketonic resins, acrylic resins, polyamides, polyurethanes, (chlorinated) polyesters, poly diallylphthalate resins (DAP) and copolymers are used as inert resin in a coating composition. All of them have more or less disadvantages. For example, chlorine containing resins, such as chlorinated polyesters, are very difficult to recycle, because they decompose thermally and produce hydrochloride that is released to the environment. Especially CAB and DAP resins are very often used as inert resin in radiation curing compositions due to their additional advantageous effects on the cured coating. For example, if used in offset printing inks, CAB and DAP resins have a positive effect on the printing performance and especially the stability of the ink/water balance during the printing process at higher printing speeds. A further advantage of CAB is that it is derived from a natural polymer, namely from cellulose. More specifically, cellulose acetate butyrate is a mixed ester thermoplastic derivative of cellulose acetate that contains both acetate and butyrate functional groups being grafted onto a cellulose backbone. The exact properties of CAB are determined by the molecular weight and amount of acetate and butyrate groups grafted to the cellulose backbone. However, CAB is likewise to DAP very expensive. Moreover, CAB as well as DAP are sensitive to hydrolyzation and release thereby butyric acid. However, butyric acid has a very bad odor already at small concentrations, which highly limits the use of CAB resins for a plurality of applications, such as for instance as ingredient of printing inks or printing varnishes for food contacting materials, such as primary food packages.

EP 3 842 467 A1 discloses an ester resin for inks obtained by reacting a rosin an an epoxy compound having a branched structure and having an epoxy in each branched structure, a polyvalent carboxylic acid, a polyfunctional epoxy compound and an unsaturated carboxylic acid.

In view of this, the object underlying the present invention is to provide a polymer being particularly suitable as inert resin for a radiation curing coating composition, such as in particular for a radiation curing printing ink composition or a radiation curing varnish composition, being able, if contained in a coating composition, to reduce the shrinkage and in particular the lateral shrinkage of a coated and cured layer composition upon exposure to irradiation, wherein this polymer is not part of the propagation reaction of the radical polymerization reaction upon exposure to radiation, is synthesized at least mainly with natural raw materials and leads, if contained in a coating composition, to a good adhesion on non-absorbent substrates such as plastic substrates having a low energy surface. Examples of such low energy surfaces are polyethylene terephthalate (PET), polyvinyl chloride (PVC), polyethylene (PE), polypropylene (PP) or biaxially oriented polypropylene BOPP films or metallized surfaces.

In accordance with the present invention this object is satisfied by providing a polymer being obtainable by a method comprising the following steps:
a) reacting a₁) at least one compound being selected from the group consisting of polyhydroxy-functionalized compounds, polyepoxy-functionalized compounds, polythiol-functionalized compounds, compounds comprising at least one group being selected from hydroxy groups, epoxy groups and thiol groups and at least a different group being selected from hydroxy groups, epoxy groups and thiol groups and arbitrary combinations of two or more thereof with a₂) at least one α,β-unsaturated carboxylic acid comprising two or more carboxylic groups and/or at least one anhydride thereof so as to obtain a first reaction product,
b) reacting b₁) the first reaction product with b₂) at least one rosin acid containing at least two conjugated double bonds so as to obtain a second reaction product,
c) reacting c₁) the second reaction product with c₂) at least one amine compound comprising two or more primary and/or secondary amine groups so as to obtain a third reaction product,
d) reacting d₁) the third reaction product with d₂) at least one epoxy compound so as to obtain the polymer,
wherein the polymer does not contain any terminal vinyl groups, does not contain any terminal acrylic groups and does not contain any terminal methacrylic groups.

This solution bases on the surprising finding that the above described polymer is able, if contained in a radiation curing coating composition, to reduce the shrinkage and in particular the lateral shrinkage of a coated and cured layer composition upon exposure to radiation, such as UV irradiation, and furthermore leads to a good adhesion on non-absorbent substrates, such as plastic substrates having a low energy surface, such as polyethylene terephthalate (PET), polyvinyl chloride (PVC), polyethylene (PE), polypropylene (PP) or biaxially oriented polypropylene BOPP films or metallized surfaces. On account of these reasons, the polymer in accordance with the present invention is particularly suitable as inert resin for a radiation curing coating composition, such as in particular for a radiation curing printing ink composition or a radiation curing printing varnish composition. A further important advantage of the polymer in accordance with the present invention is that it is based at least mainly on natural raw materials by using rosin acid(s) as one of the main reactants.

A polymer means in accordance with the present invention a substance being composed of molecules being a sequence of one or more types of monomer units. Such molecules are characterized by a molecular weight distribution, wherein differences in the molecular weight are primarily attributable to differences in the number of monomer units in the molecules. Furthermore, a monomer unit is defined in accordance with the present invention as a substance which may be converted via a polymerization reaction into a repeating unit of the polymer sequence. In accordance with the REACH (Registration, Evaluation, Authorisation and Restriction of Chemicals) definition (Regulation (EC) No 1907/2006) of the European Chemical Agency (Echa), a polymer is preferably defined as a substance meeting the following criteria:
a) More than 50% of the weight of the substance consists of polymer molecules with a minimum of three monomer units which are covalently bound to at least one other monomer unit or other reactants.
b) The amount of polymer molecules presenting the same molecular weight is less than 50% by weight of the substance.

In accordance with the present invention, the polymer is not curable or polymerizable, respectively, upon exposure to radiation, such as UV irradiation, why the polymer does not contain any terminal vinyl groups, does not contain any terminal acrylic groups and does not contain any terminal methacrylic groups. Preferably, the polymer in accordance with the present invention does not contain any terminal carbon-carbon double bond.

In accordance with the present invention, in step a) at least one compound being selected from the group consisting of polyhydroxy-functionalized compounds, polyepoxy-functionalized compounds, polythiol-functionalized compounds, compounds comprising at least one functional group being selected from hydroxy groups, epoxy groups and thiol groups and at least one different functional group being selected from hydroxy groups, epoxy groups and thiol groups and arbitrary combinations of two or more thereof is reacted with a₂) at least one α,β-unsaturated carboxylic acid comprising two or more carboxylic groups and/or at least one anhydride thereof so as to obtain a first reaction product. Preferably, in step a) at least one polyhydroxy-functionalized compound a₁) is used, wherein this compound preferably comprises at least two hydroxyl groups and more preferably at least three hydroxyl groups. Particularly preferably, the at least one polyhydroxy-functionalized compound a₁) comprises at least two terminal hydroxyl groups and more preferably at least three terminal hydroxyl groups. Primary hydroxyl groups are particularly preferred so that the at least one polyhydroxy-functionalized compound a₁) comprises even more preferably at least two primary hydroxyl groups and still more preferably at least three primary hydroxyl groups. The at least one polyhydroxy-functionalized compound a₁) may be branched, linear or cyclic and may or may not contain heteroatoms, such as nitrogen, oxygen or sulfur atoms.

Suitable examples for the at least one polyhydroxy-functionalized compound a₁) used in step a) are those, which are selected from the group consisting of 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols and arbitrary combinations of two or more of the aforementioned compounds.

If in step a) at least one polyepoxy-functionalized compound is used, it is preferred that the at least one polyepoxy-functionalized compound a₁) comprises at least two epoxy groups and preferably at least three epoxy groups. Particularly preferably, the at least one polyepoxy-functionalized compound a₁) comprises at least two terminal epoxy groups and more preferably at least three terminal epoxy groups.

Good results are in particular obtained, when the at least one polyepoxy-functionalized compound is selected from the group consisting of polyglycidylethers, bisphenol A diglycidylethers, bisphenol F diglycidylethers, 3,4-epoxycyclohexylmethyl-3',4'-epoxy-cyclohexane carboxylates, epoxyphenol novolaks, 1,4-butanediol diglycidylethers, neopentylglycol diglycidylethers, 2-ethylhexyl glycidylethers, 1,6-hexandiol diglycidylethers, polyoxypropylenglycol diglycidylethers, trimethylolpropane polyglycidylethers, poly(tetramethylene oxide) diglycidylethers, C₁₂₋₁₄-glycidylethers, C₁₂₋₁₄-polyethyleneoxide-glycidylethers, polyglycerol-3-polyglycidylethers, glycerin polyglycidylethers, pentaerythrol polyglycidylethers, trimethylolpropane polyglycidylethers, polyglycidylether ethoxylated trimethylolpropanes, hydrated bisphenol A-diglycidylethers, hydrated bisphenol F-diglycidylethers, triglycidyl isocyanurates, novolac resins and arbitrary combinations of two or more of the aforementioned polyepoxy-functionalized compounds.

If in step a) at least one polythiol-functionalized compound is used, it is preferred that the at least one polythiol-functionalized compound a₁) comprises at least two thiol groups and more preferably at least three thiol groups. Particularly preferably, the at least one polythiol-functionalized compound a₁) comprises at least two terminal thiol groups and more preferably at least three terminal thiol groups. Primary thiol groups are particularly preferred so that the at least one polythiol-functionalized compound a₁) comprises even more preferably at least two primary thiol groups and still more preferably at least three primary thiol groups. The at least one polythiol-functionalized compound a₁) may be branched, linear or cyclic and may or may not contain heteroatoms, such as nitrogen, oxygen or sulfur atoms.

Suitable examples for the at least one polythiol-functionalized compound a₁) used in step a) are those, which are selected from the group consisting of tetrahydrothiophenes, 1,4-dithienes, esters of 3-mercaptopropionic acid, esters of thioglycolic acid, esters of 3-mercapto butyric acid, dithiols, trithiols and arbitrary combinations of two or more of the aforementioned polythiol compounds. Good results are in particular obtained, when the at least one polythiol-functionalized compound is selected from the group consisting of 1,2,3-trimercaptopropane, tetrakis(mercaptomethyl)methane, 3,4-dimercaptotetrahydrothiophene, 3,4-di-(mercaptomethyl)tetrahydrothiophene, 3,4-di (mercaptoethylthio) tetrahydrothiophene, 3,4-di-(mercaptoethylthiomethyl)tetrahydrothiophene, 2,5 di (mercaptomethyl) tetrahydrothiophene, 2,5 di-(mercaptoethylthiomethyl)tetrahydrothiophene, 2,3 dimercaptomethyl-1,4-dithiane, 2,5 dimercaptomethyl-1,4-dithiane, 2,3-di-(mercaptoethylthiomethyl)-1,4-dithiane, 2,5 di-(mercaptoethyl thiomethyl)-1,4-dithiane, 2,3-di-(mercaptopropylthiomethyl)-1,4 dithiane, 2,5-di-(mercaptopropylthiomethyl)-1,4-dithiane, 2,3-di-(mercaptoethylthioethyl)-1,4-dithiane, esters of 3-mercaptobutyric acid with the polyols 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris-(2-hydroxyethyl)isocyanurate, neopentyl glycol, ethylene glycol, diethylene glycol, propylene glycol, methylpropanediol, polyether polyols, ethoxylated or propoxylated branched polyols; esters of thioglycolic acid with the polyols 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris-(2-hydroxyethyl)isocyanurate, neopentyl glycol, ethylene glycol, diethylene glycol, propylene glycol, methylpropanediol, polyether polyols, ethoxylated or propoxylated branched polyols; esters of 3-mercaptopropionic acid with the polyols 1,2,4-butanetriol, 1,2,6-hexanetriol, 3-methyl-pentane-1,3,5-triol, diglycerin, dipen-taerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols; 1,2-ethanedithiol, 1, 2-propanedithiol, 1,3-propanedithiol, 1,4-butanedithiol, 1,6-hexanedithiol, 1,7-heptanedithiol, 1,8-octanedithiol, 1,9-nonanedithiol, 1,10-decanedithiol, 1, 12-dodecanedithiol, 2, 2-dimethyl-1,3-propanedithiol, 3-methyl-1,5-pentanedithiol, 2-methyl-1,8-octanedithiol, 1, 4-cyclohexanedithiol, 1,4-bis (mercaptomethyl) cyclohexane, 1,1-cyclohexanedithiol, 1,2-cyclohexanedithiol, bicyclo [2, 2, 1] hept-exo-cis-2, 3-dithiol, 1,1-bis (mercaptomethyl) cyclohexane, bis (2-mercaptoethyl) ether, 1,4-dithioerythritol, 1,1,1-tris (mercaptomethyl)-ethane, 2-ethyl-2-mercaptomethyl-1, 3-propanedithiol, 1, 2, 3-propanetrithiol and arbitrary combinations of two or more of the aforementioned polythiol compounds.

In step a₁) a compound comprising at least one functional group being selected from hydroxy groups, epoxy groups and thiol groups and at least one different functional group being selected from hydroxy groups, epoxy groups and thiol groups may be used. It is meant in this connection that the compound comprises two different functional groups, namely at least one group being selected from hydroxy groups, epoxy groups and thiol groups, such as one hydroxy group, and at least a different group thereof, i.e. in this example at least one being selected from epoxy groups and thiol groups. The sum of the number of all hydroxy groups, epoxy groups and thiol groups of the compound is at least two, preferably at least three or at least four. Preferably, at least two of the functional groups are terminal groups, even more preferably all of the at least two functional groups are terminal groups.

Suitable examples for the at least one compound comprising at least one functional group being selected from hydroxy groups, epoxy groups and thiol groups and at least one different functional group being selected from hydroxy groups, epoxy groups and thiol groups a₁) used in step a) are those, which are selected from the group consisting of monoester of 3-mercapto propionic acid with mono-, di-, tri or polypropylene glycol, mono-, di-, tri or polyethylene glycol, neopentylglycol, methyl propane diol, dodecahydrobisphenol A, cyclohexan-1,4-dimethanol, hexanediol; monoester or diester of 3-mercapto propionic acid with 1,2,4-butanetriol, 1,2,6-hexanetriol, 3-methyl-pentane-1,3,5-triol, trimethylol butane, trimethylol ethane, trimethylol hexane, trimethylol octane, glycerin, propoxylated glycerin; monoglycidylether of mono-, di-, tri or polypropylene glycol, mono-, di-, tri or polyethylene glycol, neopentylglycol, methyl propanediol, dodecahydrobisphenol A, cyclohexane-1,4-dimethanol, hexanediol; mono- and di-glycidylether of 1,2,4-butanetriol, 1,2,6-hexanetriol, 3-methyl-pentane-1,3,5-triol, trimethylol butane, trimethylol ethane, trimethylol hexane, trimethylol octane, glycerin, propoxylated glycerin.and arbitrary combinations of two or more of the aforementioned compounds.

As set out above, in step a) one compound being selected from the group consisting of polyhydroxy-functionalized compounds, polyepoxy-functionalized compounds, polythiol-functionalized compounds, compounds comprising at least one group being selected from hydroxy groups, epoxy groups and thiol groups and at least a different group being selected from hydroxy groups, epoxy groups and thiol groups or a mixture of two or more thereof is reacted with at least one α,β-unsaturated carboxylic acid comprising two or more carboxylic groups and/or at least one anhydride. Not only the compound comprising at least one functional group being selected from hydroxy groups, epoxy groups and thiol groups and at least one different functional group being selected from hydroxy groups, epoxy groups and thiol groups is a compound with different functionalities, but also any of the polyhydroxy-functionalized compounds, polyepoxy-functionalized compounds and polythiol-functionalized compounds may have a mixed functionality, i.e. it may be a compound comprising another functional group, such as for instance two hydroxyl groups and one thiol group or it may be a compound comprising two hydroxyl groups and two epoxy groups. In such a case of a mixed functionality the respective compound for instance comprising two hydroxyl groups and two thiol groups is both, a polyhydroxy-functionalized compound as well as a polythiol-functionalized compound.

In a further development of the idea of the present invention it is suggested that the at least one α,β-unsaturated carboxylic acid comprising two or more carboxylic groups a₂) is selected from the group consisting of maleic acid, fumaric acid, acetylenedicarboxylic acid, glutaconic acid, traumatic acid, muconic acid, glutinic acid, citraconic acid, mesaconic acid, itaconic acid and arbitrary combinations of two or more of the aforementioned carboxylic acids.

If in component a₂) one or more anhydrides are used, it is preferred that the at least one anhydride a₂) is an anhydride of an α,β-unsaturated carboxylic acid being selected from the group consisting of maleic acid, fumaric acid, acetylenedicarboxylic acid, glutaconic acid, traumatic acid, muconic acid, glutinic acid, citraconic acid, mesaconic acid and itaconic acid. Also, mixed anhydrides may be used, which derive from two different α,β-unsaturated carboxylic acids, such as in particular from two different α,β-unsaturated carboxylic acids each of which being selected from the group consisting of maleic acid, fumaric acid, acetylenedicarboxylic acid, glutaconic acid, traumatic acid, muconic acid, glutinic acid, citraconic acid, mesaconic acid and itaconic acid. Moreover, a mixture of two or more different anhydrides of one or more α,β-unsaturated carboxylic acids may be used.

The reaction mixture, which is reacted in step a), comprises the components a₁) and a₂), but may additionally comprise other components, such as catalyst, stabilizer, additive and solvent or the like. However, it is preferred that the reaction mixture, which is reacted in step a), comprises in addition to the components a₁) and a₂) only the required minimal amounts of other components and thus as much as possible of the components a₁) and a₂). In view thereof, it is preferred that the reaction mixture, which is reacted in step a), comprises at least 25% by weight, preferably at least 50% by weight, more preferably at least 70% by weight, even more preferably at least 80% by weight, yet more preferably at least 90% by weight, still more preferably at least 95% by weight and most more preferably 100% by weight of the sum of polyhydroxy-functionalized compounds, polyepoxy-functionalized compounds, polythiol-functionalized compounds, compounds comprising at least one functional group being selected from hydroxy groups, epoxy groups and thiol groups and at least one different functional group being selected from hydroxy groups, epoxy groups and thiol groups, α,β-unsaturated carboxylic acids and anhydrides of α,β-unsaturated carboxylic acids.

As set out further below, the reaction steps a) and b) may be performed so that firstly components a₁), a₂) and b₂) are mixed together, before the reaction step a) is performed at a temperature, at which only the components a₁) and a₂) react to the first reaction product, thus leading to a reaction mixture comprising the first reaction product b₁) and the component b₂). Afterwards, the reaction temperature is raised to a temperature, at which the first reaction product reacts with the component b₂). In this embodiment, it is preferred that the reaction mixture, which is reacted in step a), comprises at least 50% by weight, preferably at least 70% by weight, more preferably at least 80% by weight, even more preferably at least 90% by weight, yet more preferably at least 95% by weight, still more preferably at least 97% by weight and most more preferably 100% by weight of sum of rosin acids containing at least two conjugated double bonds, polyhydroxy-functionalized compounds, polyepoxy-functionalized compounds, polythiol-functionalized compounds, compounds comprising at least one functional group being selected from hydroxy groups, epoxy groups and thiol groups and at least one different functional group being selected from hydroxy groups, epoxy groups and thiol groups, α,β-unsaturated carboxylic acids and anhydrides of α,β-unsaturated carboxylic acids.

In both aforementioned embodiments, a catalyst for the reaction of at least one polyhydroxy-functionalized compound and at least one α,β-unsaturated carboxylic acid comprising two or more carboxylic groups and/or at least one anhydride thereof is not necessary in this reaction step. Likewise thereto, a catalyst for the reaction of at least one polythiol-functionalized compound and at least one α,β-unsaturated carboxylic acid comprising two or more carboxylic groups and/or at least one anhydride thereof is not necessary in this reaction step. However, a catalyst may be added for the reaction of at least one polyepoxy-functionalized compound with at least one α,β-unsaturated carboxylic acid comprising two or more carboxylic groups and/or at least one anhydride thereof. Suitable catalysts therefore are 2-ethylimidazole, zirconium octanoate, N,N-dimethylbenzylamine (BDMA), tertiary amines, such as tributylamine, and triphenylphosphine. One or more of these catalysts may be added preferably in an amount of 0.1 to 0.5% by weight based on the total weight of the reaction mixture of step a).

Good results are in particular obtained, when in step a) the ratio of the molar equivalent of the sum of polyhydroxy-functionalized compound(s), polyepoxy-functionalized compound(s), polythiol-functionalized compounds and compounds comprising at least one functional group being selected from hydroxy groups, epoxy groups and thiol groups and at least one different functional group being selected from hydroxy groups, epoxy groups and thiol groups a₁) divided by the molar equivalent of the sum of α,β-unsaturated carboxylic acid(s) and anhydride(s) thereof a₂) is 1:0.1 to 1:2.

The present invention is not particularly limited concerning the kind of the at least one rosin acid containing at least two conjugated double bonds b₂) used in reaction step b). Good results are in particular obtained, when at least one rosin acid b₂) is used, in which the at least two conjugated double bonds of the at least one rosin acid b₂) are not part of an aromatic ring system

The at least one rosin acid b₂) may comprise two or more conjugated double bonds, but it is preferred that the at least one rosin acid b₂) comprises exactly two conjugated double bonds.

Good results are in particular obtained, when in step b) at least one rosin acid b₂) is used, which comprises three fused C₆-hydrocarbon rings and preferably three fused non-aromatic C₆-hydrocarbon rings.

In a particular preferred embodiment of the present invention, the at least one rosin acid b₂) is a rosin ester, which is selected from the group consisting of pimaric acid, neoabietic acid, palustric acid, abietic acid, levopimaric acid and arbitrary combinations of two or more of the aforementioned carboxylic acids. Most preferably, the at least one rosin acid b₂) is levopimaric acid, because levopimaric acid has the highest reactivity towards the α,β-unsaturated carboxylic acids comprising two or more carboxylic groups and anhydrides thereof a₂). The other aforementioned rosin acids may at least partially rearrange at temperatures of about 230 °C to levopimaric acid.

In a further development of the idea of the present invention it is suggested that the at least one rosin acid b₂) provided in step a) is added in form of rosin and/or dimerized rosin and/or disproportionated rosin. Dimerized rosin may be prepared by subjecting rosin to elevated temperatures, such as of at least 260°C. The rosin and/or dimerized rosin and/or disproportionated rosin preferably contains 40 to 90% by weight of one or more rosin acids containing at least two conjugated double bonds. A particular advantage of using rosin as source for the at least one rosin acid b₂) used in step b) is that rosin is a natural product. Suitable rosin types are those selected from the group consisting of Himachal rosin, Chinese gum rosin, Brazilian rosin, Brazilian gum rosin, pinus hibbrido, pinus elliotto, Indonesian rosin, Vietnam rosin, Mexican rosin, tall oil rosin, tropical rosin and arbitrary combinations of two or more of the aforementioned rosins.

Likewise to step a), the reaction mixture, which is reacted in step b), comprises the components b₁) and b₂), but may additionally comprise other components, such as catalyst, stabilizer, additive and solvent or the like. However, it is preferred that the reaction mixture, which is reacted in step b), comprises in addition to the components b₁) and b₂) only the required minimal amounts of other components and thus as much as possible of the components b₁) and b₂). In view thereof, it is preferred that the reaction mixture, which is reacted in step b), comprises at least 40% by weight, preferably at least 70% by weight, more preferably at least 80% by weight and most preferably between 84 and 90% by weight of the sum of the first reaction product and rosin acid(s) containing at least two conjugated double bonds. If rosin, dimerized rosin and/or disproportionated rosin is added as source of the at least one rosin ester, it is preferred that the reaction mixture, which is reacted in step b), comprises at least 50% by weight, preferably at least 70% by weight, more preferably at least 80% by weight, even more preferably at least 90% by weight, yet more preferably at least 95% by weight, still more preferably at least 99% by weight and most more preferably 99.9% by weight of sum of the first reaction product and rosin and/or dimerized and/or disproportionated rosin, wherein the rosin and/or dimerized and/or disproportionated rosin preferably contain(s) 40 to 90% by weight and more preferably 60 to 70% by weight of rosin acid(s) containing at least two conjugated double bonds.

Good results are in particular obtained, when in step b) the ratio of the molar equivalent of the first reaction product and the rosin acids is 1:0.1 to 1:6.

In a further development of the idea of the present invention it is proposed that the at least one amine compound comprising two or more primary and/or secondary amine groups c₂) used in step c) is selected from the group consisting of aromatic, aliphatic or cycloaliphatic diamines, alkoxylated polyamines, polyamines, polyethylenimines, polyetheramines, polyesteramines, polyamidoamines, polyureamines and arbitrary combinations of two or more of the aforementioned compounds.

Suitable specific examples for the at least one amine compound comprising two or more primary and/or secondary amine groups c₂) used in step c) are those being selected from the group consisting of polypropylenegylcol diamine, polyethylenegylcol diamine, alkoxylated glycerol triamine, diethylene triamine, tetraethylene diamine, polytetramethyleneglycol diamine, primary amines based on polyoxyalkylene polyamine with a molecular weight preferably of 200 to 5,000 Da, N,N,N,N'-tetraglycidyldiamino-4,4'-diphenylmethane, isophorone diamine, cyanoethylated trimethyl-hexamethylenediamine, diaminodiphenylmethane and arbitrary combinations of two or more of the aforementioned compounds.

Likewise to steps a) and b), the reaction mixture, which is reacted in step c), comprises the components c₁) and c₂), but may additionally comprise other components, such as catalyst, stabilizer, additive, solvent or the like. However, it is preferred that the reaction mixture, which is reacted in step c), comprises in addition to the components c₁) and c₂) only the required minimal amounts of other components and thus as much as possible of the components c₁) and c₂). In view thereof, it is preferred that the reaction mixture, which is reacted in step c), comprises at least 50% by weight, preferably at least 70% by weight, more preferably at least 80% by weight, even more preferably at least 90% by weight, yet more preferably at least 95% by weight, still more preferably at least 99% by weight and most more preferably 100% by weight of the sum of the second reaction product and amine compounds comprising two or more primary and/or secondary amine groups.

Good results are in particular obtained, when in step c) the ratio of the molar carboxylic equivalent of the second reaction product and the molar amino group equivalent of the amine compounds comprising two or more primary and/or secondary amine groups is 1:0.5 to 1:2.0.

In accordance with the present invention, in step d) the third reaction product d₁) is reacted with d₂) at least one epoxy compound so as to obtain the polymer. The at least one epoxy compound comprises one or more epoxy compounds, but is otherwise not specifically limited.

The epoxy compound d₂) used in step d) may be the same or different as the polyepoxy-functionalized compound a₁) used in step a).

Suitable examples for the at least one epoxy compound d₂) used in step d) are those being selected from the group consisting of polyether epoxy compounds, glycidyl ether compounds, glycidyl ester compounds, epoxidized vegetable oils, phenol novolak resins, epoxy phenol novolak resins, aromatic epoxy resins, aliphatic epoxy resins and arbitrary combinations of two or more of the aforementioned compounds.

Suitable specific examples for the at least one epoxy compound d₂) used in step d) are those being selected from the group consisting of epoxidized soybean oil comprising preferably 4 to 6 epoxy groups, epoxidized castor oil, epoxidized linseed oil, vernolic acid, bisphenol A diglycidylether, bisphenol F diglycidylether, 3,4-epoxycyclohexylmethyl-3',4'-epoxy-cyclohexane carboxylate, epoxyphenol novolak, 1,4-butanediol diglycidylether, neopentylglycol diglycidylether, 2-ethylhexyl glycidylether, 1,6-hexandiol diglycidylether, polyoxypropylenglycol diglycidylether, trimethylolpropane polyglycidylether, poly(tetramethylene-oxid) diglycidylether, C₁₂₋₁₄-glycidylether, C₁₂₋₁₄-polyethyleneoxide-glycidylether, polyglycerol-3-polyglycidylether, glycerin polyglycidylether, pentaerythrol polyglycidylether, trimethylolpropane polyglycidylether, ethoxylated trimethylolpropane polyglycidylether, hydrated Bisphenol A-diglycidylether, hydrated Bisphenol F-diglycidylether, triglycidyl isocyanurate and arbitrary combinations of two or more of the aforementioned compounds.

Likewise to steps a) to c), the reaction mixture, which is reacted in step d), comprises the components d₁) and d₂), but may additionally comprise other components, such as catalyst, stabilizer, additive, solvent or the like. However, it is preferred that the reaction mixture, which is reacted in step d), comprises in addition to the components d₁) and d₂) only the required minimal amounts of other components and thus as much as possible of the components d₁) and d₂). In view thereof, it is preferred that the reaction mixture, which is reacted in step d), comprises at least 50% by weight, preferably at least 70% by weight, more preferably at least 80% by weight, even more preferably at least 90% by weight, yet more preferably at least 95% by weight, still more preferably at least 99% by weight and most more preferably 99.85% by weight of sum of the third reaction product d₁) and epoxy compound d₂).

It is preferred that the reaction mixture in step d) contains up to 5% by weight, more preferably up to 2% by weight, still more preferably up to 1% by weight, yet more preferably up to 0.5% by weight and most preferably 0.01 to 0.15% by weight of one or more stabilisers, based on the total weight of the reaction mixture of step d). Suitable stabilisers are 4-methoxyphenole, phenothiazine, butylhydroxytoluene, hydroquinone, copper chloride, copper sulfate and the like. For instance, a particular suitable stabiliser is a mixture, which comprises 0.1% by weight of 4-methoxyphenole and 0.05% by weight of phenothiazine, based on the total weight of the reaction mixture of step d). Also, the reaction mixture used in step d) may further comprise one or more antioxidants, such as triphenylphosphine, hypophosphoric acid or the like.

Good results are in particular obtained, when in step d) the ratio of the molar carboxylic equivalent of the third reaction product and the molar oxirane group equivalent of the epoxy compounds is 1:0.5 to 1:2.0.

As a result of the aforementioned described reaction steps, the polymer in accordance with the present invention preferably comprises the following three substructural units:
i) One or more substructural units in accordance with general formula (1): 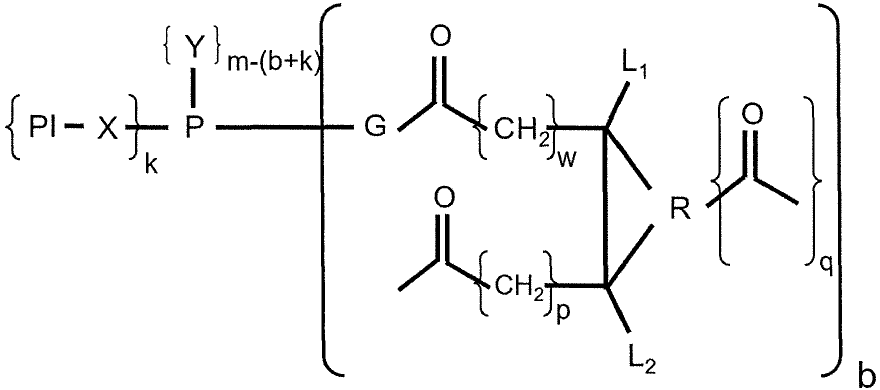 wherein:
   - PI: is a photoinitiator or co-initiator group,
   - X: is an (thio)ester, urethane, amide or (thio)ether group,
   - P: is a group corresponding to the part of the polyhydroxy compound except the terminal hydroxy groups and/or part of the polyepoxy-functionalized compound except the oxirane groups and/or part of the polythiol compound except the terminal thiol groups and/or part of the compound comprising at least one functional group being selected from hydroxy groups, epoxy groups and thiol groups and at least one different functional group being selected from hydroxy groups, epoxy groups and thiol groups except the functional groups of reaction step a),
   - G: is oxygen or sulfur
   - Y: is a non-reacted hydroxy, thio or oxirane group of the polyhydroxy and/or polyepoxy and/or polythiol compound from reaction step a),
   - m: is an integer corresponding to the functionality of polyhydroxy and/or polyepoxy and/or polythiol compound of reaction step a) and is 2 to 20,
   - b: is an integer of 1 to m,
   - k: is an integer of 0 to 2,
   - w: is an integer of 0 to 2,
   - q: is an integer of 0 to 2 and
   - p: is an integer of 1 to 2
   - L₁ and L₂: are independently from each other selected from H, C₁₋₄-alkyl groups or being a bond with L₁ or L₂
   - R: is a group corresponding to the at least one rosin acid containing at least two conjugated double bonds in reaction step b) except the terminal one or two carboxylic acid groups.
ii) One or more substructural units in accordance with general formula (2): 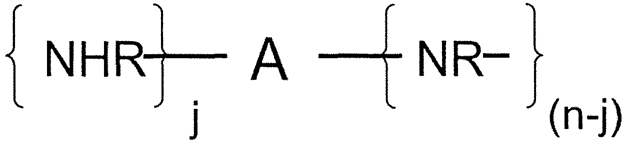 wherein:
   - A: is a group corresponding to the part of the primary and/or secondary polyamine compound except the terminal amino groups of reaction step c),
   - R: is H, a linear or branched C₁₋₁₀-alkyl or a linear or branched C₁₋₁₀-alkenyl group,
   - n: is an integer corresponding to the functionality of the primary or secondary amines of reaction step c) and is 2 to 20 and
   - j: is an integer of 0 to n-1.
iii) One or more substructural units in accordance with general formula (3): 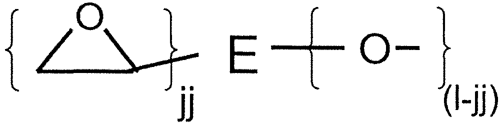 wherein:
   - E: is a group corresponding to the part of the polyepoxy-functionalized compound except the epoxy groups of reaction step d),
   - I: is an integer corresponding to the functionality of the polyepoxy-functionalized compound and is 1 to 20 and
   - jj: is an integer of 0 to n-1.
All these three structural units may be arbitrarily connected with each other.

For instance the three aforementioned structural units may be connected with each other by means of one or more linkage groups.

An example for such a polymer in accordance with the present invention comprises the following three substructural units:
i) One or more substructural units in accordance with general formula (4): 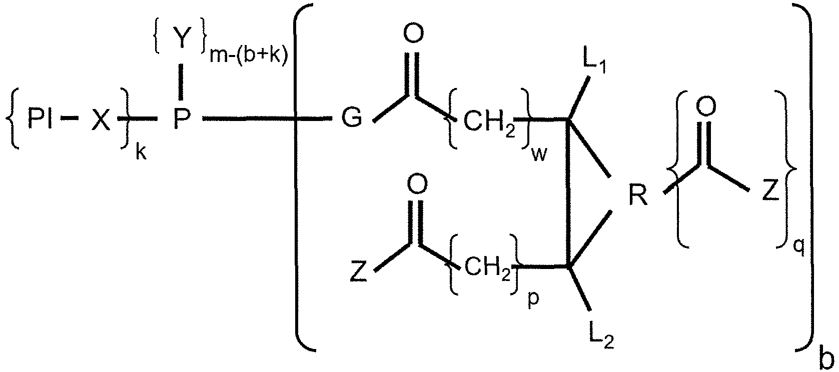 wherein:
   - Z: is either a bond or a linkage group, which is for instance a group linking the structure of general formula (1) with the structure of general formula (2) or general formula (3). The linkage group may be any chemical group having at least one group of -OH and/or -SH forming the ester or thioester bond to general formula (1) and having at least one carboxylic group, acid chloride group and/or isocyanate group forming the bond to general formula (2) or general formula (3) and
   all other groups and indices are as described above for the general formula (1).
ii) One or more substructural units in accordance with general formula (5): 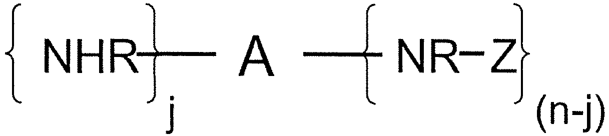 wherein:
   - Z: is either a bond or a linkage group, which is for instance a group linking the structure of general formula (2) with the structure of general formula (1) or general formula (3). The linkage group may be any chemical group having at least one group of -O-, -S-, or -NR group with R being either H, a linear or branched C₁₋₁₀-alkyl or a linear or branched C₁₋₁₀-alkenyl group forming the ester, thioester or amide bond to general formula (1) and having at least one carboxylic group, acid chloride group and/or isocyanate group forming the bond to general formula (1) or general formula (3) and

   all other groups and indices are as described above for the general formula (2).
iii) One or more substructural units in accordance with general formula (6): 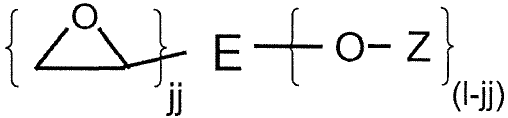 wherein:
   - Z: is either a bond or a linkage group, which is for instance a group linking the structure of general formula (3) with the structure of general formula (1) or general formula (2). The linkage group may be any chemical group having at least one group of -OH and/or -SH forming the ester bond to general formula (1) and having at least one carboxylic group, acid chloride group and/or isocyanate group forming the bond to general formula (1) or general formula (2) and
   all other groups and indices are as described above for the general formula (3).

In a specific embodiment, in which the at least one rosin acid containing at least two conjugated double bonds b₂) is levopimaric acid and the at least one α,β-unsaturated carboxylic acid a₂) is maleic anhydride, the polymer may comprise one or more of the structural units of general formula (5), one or more of the structural units of general formula (6) and one or more of the structural units of the below general formula (7): 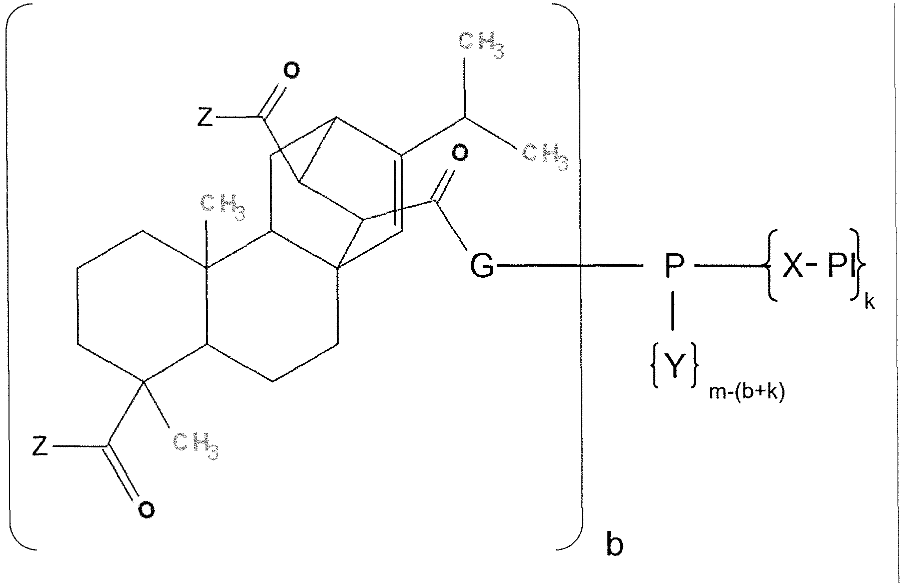 wherein:
- PI: is a photoinitiator or co-initiator group,
- X: is an ester, urethane, amide or ether group,
- P: is a group corresponding to the part of the polyhydroxy compound except the terminal hydroxy groups and/or the part of the polyepoxy compound except the oxirane groups and/or part of the polythiol compound except the terminal thiol groups and/or part of the compound comprising at least one functional group being selected from hydroxy groups, epoxy groups and thiol groups and at least one different functional group being selected from hydroxy groups, epoxy groups and thiol groups except the functional groups of reaction step a),
- G: is oxygen or sulfur
- Y: is a non-reacted hydroxy or oxirane group of the polyhydroxy and/or polyepoxy and/or polythiol compound from reaction step a),
- m: is an integer corresponding to the functionality of polyhydroxy and/or polyepoxy and/or polythiol compound of reaction step a) and is 0 to 20,
- b: is an integer of 1 to m,
- k: is an integer of 0 to 2, and
- Z: is either a bond or a linkage group, which is for instance a group linking the structure of general formula (7) with the structure of general formula (2) or general formula (3). The linkage group may be any chemical group having at least one group of -OH and/or -SH forming the ester bond to general formula (7) and having at least one carboxylic group, acid chloride group and/or isocyanate group forming the bond to general formula (2) or general formula (3).

A further particular preferred embodiment of the present invention refers to a polymer comprising one or more of the structural units of general formula (5), one or more of the structural units of general formula (6) and one or more of the structural units of the below general formula (8), in which the at least one rosin acid containing at least two conjugated double bonds b₂) is levopimaric acid, the at least one α,β-unsaturated carboxylic acid a₂) is maleic anhydride and the at least one polyhydroxy-functionalized compound and/or at least one polyepoxy-functionalized compound and/or at least one polythiol compound a₁) is tris-(2-hydroxyethyl) isocyanurate: 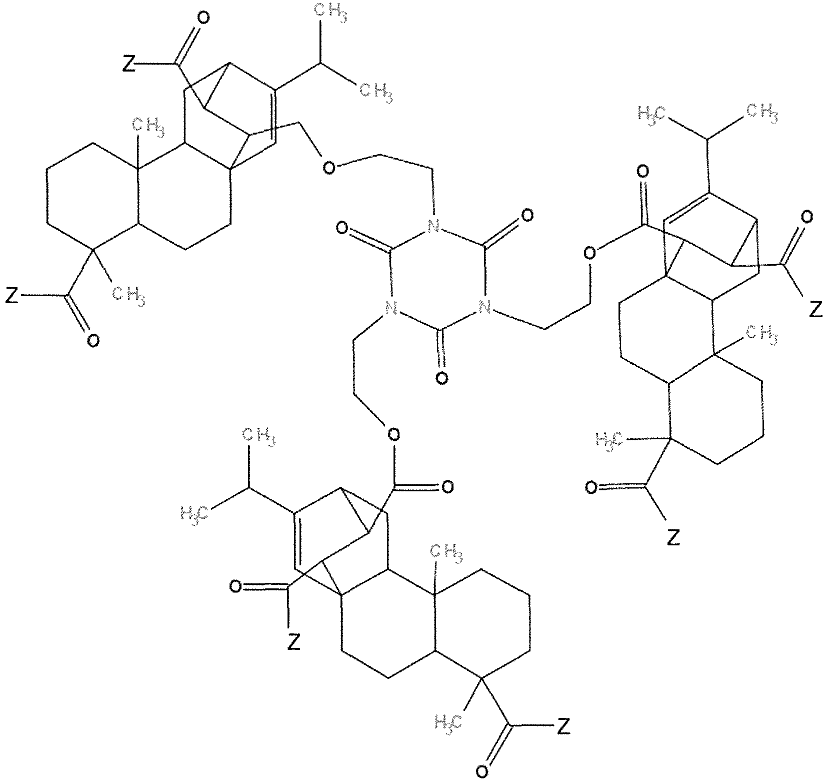 wherein:
Z is either a bond or a linkage group, which is for instance a group linking the structure of general formula (8) with the structure of general formula (2) or general formula (3). The linkage group may be any chemical group having at least one group of -OH forming the ester bond to general formula (8) and having at least one carboxylic group, acid chloride group and/or isocyanate group forming the bond to general formula (2) or general formula (3).

In accordance with a further particularly preferred embodiment of the present invention, the component a₂) in step a) also comprises (in addition to the at least one aliphatic polyhydroxy-functionalized compound and/or at least one polyepoxy-functionalized compound and/or at least one polythiol compound and/or at least one compound comprising at least one group being selected from hydroxy groups, epoxy groups and thiol groups and at least a different group being selected from hydroxy groups, epoxy groups and thiol groups a₁) and in addition to the at least one α,β-unsaturated carboxylic acid comprising two or more carboxylic groups and/or at least one anhydride thereof a₂)) one or more photoinitiator compounds with a functional group being selected from the group consisting of carboxylic groups, acid chloride groups, hydroxyl groups, primary amino groups, halogen groups, isocyanate groups, epoxy groups and arbitrary combinations of two or more of the aforementioned functional groups.

A Photoinitiator compound is defined in the present invention as a substance that may generate start radicals for the radical polymerization reaction of ethylenic double bonds, such as for allyl ethers, (meth)acrylates or itaconates, when the substance is exposed to UV irradiation or to visible light. There are three classes of photoinitiators known for free radical polymerization reactions, namely type I photoinitiators, type II photoinitiators and co-initiators. The first class are type I photoinitiators, which are substances that undergo a fragmentation forming two radicals, when they are in the excited state. At least one of the radicals reacts as start radical for the radical polymerization reaction of ethylenic groups. For the class of type II photoinitiator a co-initiator (which is the third class of photoinitiator) is required to create the start radical. In the primary process after the photon absorption the photoinitiator abstracts a hydrogen atom from a co-initiator to produce a rather unreactive ketyl radical. Only the radical being created by the H atom abstraction from the co-initiator can react as start radical for the radical polymerization reaction. Typically type II photoinitiators are those of the group of benzophenones, thioxanthones, fluorenones, xanthones and anthraquinones. Co-initiators are typically tertiary amines, or more specifically aromatic tertiary amines, such as dimethylaminobenzoates or derivatives thereof.

Particular good results are obtained, when the one or more photoinitiator compounds are selected from the group consisting of benzophenones and thioxanthones being functionalized as set out above, i.e. with functional groups being selected from the group consisting of carboxylic groups, acid chloride groups, hydroxyl groups, primary amino groups, halogen groups, epoxy groups, isocyanate groups and arbitrary combinations of two or more of the aforementioned functional groups.

Suitable specific examples for photoinitiator compounds are those being selected from the group consisting of 4-phenyl benzophenone, 1,1'-(methylene-di-4,1-phenylene)bis[2-hydroxy-2-methyl-1-propanone], 2-(4-Methylbenzyl)-2-(dimethylamino)-1-(4-morpholinophenyl)butan-1-one, 2,4,6-trimethylbenzoyldiphenylphosphine oxide, 2,4-diethylthioxanthone, 2-benzyl-2-(dimethylamino)-4'-morpholinobutyrophenone, 2-benzyl-2-dimethylamino-1-(4-morpholinylphenyl)-butanon-1, 2-ethyl anthraquinone, 2-methyl-1- [4-(methylthio) phenyl]-2-(4-morpholinyl)-1- propanone, benzene, (1-methylethenyl)-, homopolymer, ar-(2-hydroxy-2-methyl-1-oxopropyl), benzildimethylketal, benzophenone, camphorquinone, chlorothioxanthone, ethoxyphenyl(2,4,6-trimethylbenzoyl)phosphine oxide, isopropylthioxanthone, methylbenzophenone, phenylbis(2,4,6-trimethylbenzoyl)phosphine oxide, polymeric benzophenone derivatives, thioxanthone, polymeric thioxanthone derivatives, 2-benzyl-2-(dimethylamino)-4'-morpholinobutyrophenone and arbitrary combinations of two or more of the aforementioned compounds being functionalized as set out above, i.e. with a functional group being selected from the group consisting of carboxylic groups, acid chloride groups, hydroxyl groups, primary amino groups, halogen groups, epoxy groups, isocyanate groups and arbitrary combinations of two or more of the aforementioned functional groups.

Good results are in particular obtained, when in this second, particularly preferred embodiment of the present invention in step a) the ratio of the molar equivalent of the sum of polyhydroxy-functionalized compound(s), polyepoxy-functionalized compound(s), polythiol compound(s), compounds comprising at least one functional group being selected from hydroxy groups, epoxy groups and thiol groups and at least one different functional group being selected from hydroxy groups, epoxy groups and thiol groups a₁) divided by the molar equivalent of the sum of α,β-unsaturated carboxylic acid(s), anhydride(s) thereof and photoinitiator compounds a₂) is 1:0.5 to 1:2, wherein the ratio of the molar equivalent of the α,β-unsaturated carboxylic acid(s), and/or anhydride(s) thereof and of the molar functional group equivalent of the photoinitiator compounds is preferably 9:1 to 1.5:1.

The reaction mixture, which is reacted in step a) of this second, particularly preferred embodiment of the present invention, comprises the components a₁) and a₂) including the at least one photoinitiator compound, but may additionally comprise other components, such as catalyst, stabilizer, additive, solvent or the like. However, it is preferred that the reaction mixture, which is reacted in step a), comprises in addition to the components a₁) and a₂) including the at least on photoinitiator compound only the required minimal amounts of other components and thus as much as possible of the components a₁) and a₂). In view thereof, it is preferred that the reaction mixture, which is reacted in step a) of this second, particularly preferred embodiment of the present invention, comprises at least 25% by weight, preferably at least 70% by weight, more preferably at least 80% by weight, even more preferably at least 90% by weight, yet more preferably at least 95% by weight, still more preferably at least 99% by weight and most more preferably 99.9% by weight of sum of polyhydroxy-functionalized compounds, polyepoxy-functionalized compounds, polythiol compounds, compounds comprising at least one functional group being selected from hydroxy groups, epoxy groups and thiol groups and at least one different functional group being selected from hydroxy groups, epoxy groups and thiol groups, α,β-unsaturated carboxylic acids, anhydrides of α,β-unsaturated carboxylic acids and photoinitiator compound(s).

A catalyst may be added to the reaction mixture of step a). A suitable example for a catalyst is magnesium oxide, para toluene sulfonic acid, methyl sulfonic acid, monobutyltin dihydroxychloride, which may be added preferably in an amount of 0.5 to 1.0% by weight based on the total weight of the reaction mixture of step a).

In a further development of the idea of the present invention, it is suggested that the polymer has a weight-averaged molecular weight measured by gel permeation chromatography of 600 to 50,000 g/mol, preferably of 800 to 25,000 g/mol and more preferably of 1,000 to 20,000 g/mol.

Moreover, it is preferred that the polymer has a number-averaged molecular weight measured by gel permeation chromatography of 100 to 30,000 g/mol, preferably of 500 to 20,000 g/mol and more preferably of 700 to 10,000 g/mol.

In accordance with the present invention, the weight-averaged molecular weight and number-averaged molecular weight of the polymer is determined by means of the molecular weight distribution determined by means of gel permeation chromatography. Preferably, a polystyrene standard is used. Such standards may be obtained from PSS Polymer Standards Service GmbH, Mainz, Germany. For instance, an Agilent 1200 liquid chromatography device equipped with three SDV GPC columns from PSS Polymer Standards Service GmbH, Mainz, Germany with dimensions of 300 x 8 mm (with particle size porosities of 50 Å, 1,000 Å and 100,000 Å) and a refractive index detector. The mobile phase is tetrahydrofuran, and the flow rate is set to 1 ml/min. The gel permeation chromatography is calibrated with help of 15 linear polystyrene standards from PSS Polymer Standards Service GmbH, Mainz, Germany, ranging from 266 to 2.5 x 10⁶ g/mol. The samples are for instance prepared by dissolving 100 mg of the polymer sample in 10 ml tetrahydrofuran and then 100 µl of the sample solution in THF is injected into the GPC column. Exemplarily, 50 to 70 mg of polymer is dissolved in 10 ml THF, wherein the column oven temperature is 30°C, the temperature of the RI-Detector (refractive index) is 35 °C and the flow rate 1 ml/min.

In accordance with a further preferred embodiment of the present invention, the polymer in accordance with the present invention has an acid number of 0 to 50 mg KOH/g, preferably of 0 to 20 mg KOH/g and more preferably of 1 to 10 mg KOH/g. Preferably, the acid number of the polymer is measured by titration. The quantity of KOH (given in mg) that is needed to neutralize 1 g of the substance is determined. For instance, the acid number of the polymer is measured as follows: An accurate quantity of about 2.0 g of the polymer to be measured is weighed with an accuracy of +/- 0.01 g into 25 ml of the prepared solvent mixture of 2 parts of toluene and 1 part of ethanol. The material is dissolved at room temperature or, if it does not dissolve at room temperature, at 60°C. Then, the mixture is cooled to room temperature and 2 to 3 drops of phenolphthalein indicator solution (1% dissolved in ethanol) are added and the mixture is titrated against 0.5 mol/L ethanolic KOH solution with a burette until a permanent light pink color is obtained for at least 30 seconds. The acid value is calculated according to the following formula: Acid value = (56.1 g/mol x Volume (in L) ethanolic KOH solution added x concentration of KOH solution (in mol/L)) / mass of the material (rosin-based inert resin) weighed in (in g).

In accordance with still a further preferred embodiment of the present invention, the polymer in accordance with the present invention has an amine number of 0 to 100 mg KOH/g, preferably of 0 to 50 mg KOH/g and more preferably of 2 to 20 mg KOH/g. Preferably, the amine number of the polymer is measured by titration. It is the quantity of KOH (given in mg), that equals the equivalent amount of HCI required for the neutralisation of 1 g of the substance. For instance, the amine number of the polymer is measured is as follows: As solvent for the measurement, a mixture of 2 parts of toluene and 1 part of ethanol is prepared by mixing respective volumes of toluene and ethanol in a glass beaker. Afterwards, an accurate quantity of about 2.0 g of the polymer is weighed in with an accuracy of +/- 0.01 g and dissolved in 25 ml of the prepared solvent mixture with 2 parts of toluene and 1 part of ethanol. The material is dissolved at room temperature or, if it does not dissolve at room temperature, at 60°C. Then, the mixture is cooled to room temperature and 2 to 3 drops of bromocresol green indicator solution (1% dissolved in ethanol) are added and the mixture is titrated against 0.5 mol/L HCL in a burette until a permanent light yellow color is obtained for at least 30 seconds. The amine value is calculated according to the following formula: Amine value = (56.1 g/mol x V (in L) aqueous HCI solution added x concentration of aqueous HCI solution (in mol/L)) / mass of the material (rosin-based inert resin) weighed in (in g).

In accordance with still a further preferred embodiment of the present invention, the polymer in accordance with the present invention has a softening point of 40 to 200°C, preferably of 70 to 160°C and more preferably of 80 to 150°C. In accordance with the present invention the softening point is determined by using the ring and ball method in accordance with ASTM D36. The molten polymer sample is poured into the ring of the ball and ring apparatus. After the resin sample has cooled down the ball is placed on the resin and the whole apparatus placed in a silicone bath equipped with a thermometer and a stirrer. The silicone bath is placed on a hot plate to heat it to a temperature of 180°C. When the temperature of the silicone bath reaches the softening temperature of the resin the ball starts to sink down.

In accordance with still a further preferred embodiment of the present invention, the polymer in accordance with the present invention has a viscosity, when diluted in 50% three times ethoxylated 1,1,1 trimethylol propane triacrylate (in the following described as eoTMPTA), of 1 to 300 Pa·s, preferably of 10 to 200 Pa·s and more preferably of 50 to 150 Pa·s. In accordance with the present invention the viscosity is determined by using a Physica MCR 100 Rheometer from Anton Paar GmbH, Graz, Austria with a cone-plate geometry. The cone has a diameter of 25 mm and an angle of 1°. The gap of the cone and the plate is 0.05 mm, the temperature is set to 20 °C and the viscosity is determined at a deformation rate of 50 radian/s.

A further aspect of the present invention is a method for producing a polymer in accordance with any of the preceding claims, comprising the steps of:
a) reacting a₁) at least one compound being selected from the group consisting of polyhydroxy-functionalized compounds, polyepoxy-functionalized compounds, polythiol-functionalized compounds, compounds comprising at least one functional group being selected from hydroxy groups, epoxy groups and thiol groups and at least one different functional group being selected from hydroxy groups, epoxy groups and thiol groups and arbitrary combinations of two or more thereof with a₂) at least one α,β-unsaturated carboxylic acid comprising two or more carboxylic groups and/or at least one anhydride thereof so as to obtain a first reaction product,
b) reacting b₁) the first reaction product with b₂) at least one rosin acid containing at least two conjugated double bonds so as to obtain a second reaction product,
c) reacting c₁) the second reaction product with c₂) at least one amine compound comprising two or more primary and/or secondary amine groups so as to obtain a third reaction product,
d) reacting d₁) the third reaction product with d₂) at least one epoxy compound so as to obtain the polymer,
so that the polymer does not contain any terminal carbon-carbon double bond.

The specifics mentioned above for the polymer are also valid for the method.

In particular, as set out above, the reaction steps a) and b) may be performed so that firstly components a₁), a₂) and b₂) are mixed together, before the reaction step a) is performed at a temperature, at which only the components a₁) and a₂) react to the first reaction product, thus leading to a reaction mixture comprising the first reaction product b₁) and the component b₂). Afterwards, the reaction temperature is raised to a temperature, at which the first reaction product reacts with the component b₂).

Step a) of the method is preferably conducted at a temperature of 20°C to less than 200°C, preferably at a temperature of 130 to 200°C, more preferably at a temperature of 140 to 200°C and most preferably at a temperature of 140 to 180°C, such as at about 160°C.

Preferably, step b) of the method is conducted at a temperature of at least 200°C, more preferably at a temperature of at least 210°C, more at a preferably temperature of at least 220°C and most preferably at a preferably temperature of at least 230°C. It is also preferred that the upper limit of the temperature during the reaction of step b) is less than 400°C, more preferably less than 300°C and most preferably less than 260°C. A suitable reaction temperature is for instance about 230°C.

Furthermore, it is preferred that step c) of the method is preferably conducted at a temperature of 150 to 300°C, preferably at a temperature of 200 to 260°C and most preferably at a temperature of 230 to 240°C.

In addition, it is preferred that step d) of the method is preferably conducted at a temperature of 100 to 300°C, preferably at a temperature of 150 to 210°C and most preferably at a temperature of 170 to 190°C, such as at about 180°C.

According to still a further aspect, the present invention is related to a printing ink, which comprises:
- 1 to 50% by weight of the aforementioned polymer,
- 10 to 60% by weight binder,
- 0 to 40% by weight solvent,
- 0 to 40% by weight pigment,
- 0 to 20% by weight of one or more fillers,
- 0 to 10% by weight of one or more additives and
- 0 to 10% by weight of one or more photoinitiators and/or co-initiators.

The binder is preferably selected from the group consisting of (meth)acrylate monomers, oligomers and mixtures thereof. Suitable examples therefore are polyester-acrylates, polyetheracrylates and polyurethaneacrylates, epoxyacrylates, aminoacrylates.

Suitable examples for the solvent are water, hydrocarbons, ethers, esters, ketones and mixtures thereof.

The pigment is preferably selected from the group consisting of organic and inorganic pigments, more preferably from azopigments, carbon black, titanium dioxides and mixtures thereof.

Preferred examples for fillers are those being selected from the group consisting of silicates, talcum, aluminum oxide, aluminum hydroxide, calcium and/or barium carbonates and calcium and/or barium sulfates and mixtures thereof.

Suitable additives are those being selected from the group consisting of stabilizers, leveling agents, flow additives, defoamers and mixtures thereof.

Suitable Photoinitiators and co-initiators are compounds selected from the group of benzphenones, thioxanthones, xanthones and anthraquinones, ketocoumarins, carbazoles , α-hydroxy ketones, α-aminoketones, α,β ketoesters, camphorquinones, dimethylketals, phosphine oxides, tertiary amines, or more specifically aromatic tertiary amines, such as dimethylaminobenzoates and mixtures thereof. According to still a further aspect, the present invention is related to a coating comprising, which comprises:
- 1 to 50% by weight of the aforementioned polymer,
- 10 to 70% by weight binder,
- 0 to 40% by weight solvent,
- 0 to 30% by weight pigment and filler,
- 0 to 10% by weight of one or more additives and
- 0 to 10% by weight of one or more photoinitiators and/or co-initiators.

The binder is preferably selected from the group consisting of (meth)acrylate monomers, oligomers and mixtures thereof. Suitable examples therefore are polyesteracrylates, polyetheracrylates, epoxyacrylates, aminoacrylates and polyurethaneacrylates.

Suitable examples for the solvent are water, hydrocarbons, ethers, esters, ketones and mixtures thereof.

The pigment is preferably selected from inorganic and organic pigments, more preferably selected from the group consisting of azopigments, carbon black, titanium dioxides and mixtures thereof.

Preferred examples for fillers are those being selected from the group consisting of silicates, talcum, aluminumoxide, aluminumhydroxid and calcium and/or barium sulfates and mixtures thereof.

Suitable additives are those being selected from the group consisting of stabilizers, leveling agents, flow additives, defoamers, and mixtures thereof.

Suitable Photoinitiators and co-initiators are compounds selected from the group of benzphenones, thioxanthones, xanthones and anthraquinones, ketocoumarins, carbazoles , α-hydroxy ketones, α-aminoketones, α,β ketoesters, camphorquinones, dimethylketals, phosphine oxides, tertiary amines, or more specifically aromatic tertiary amines, such as dimethylaminobenzoates and mixtures thereof.

Subsequently, the present invention is described by means of illustrating, but not limiting examples.

### Example 1

### (Intermediate product 1 produced with steps a) to c))

Steps a) and b) are performed to result in an intermediate adduct of rosin, maleic acid anhydride and tris-(2-hydroxyethyl) isocyanurate as follows: 69 parts Brazilian gum rosin (from Food Resins And Polymers, Mumbai, India) were charged into a vessel and heated until the rosin was melted. The agitator was started and heating was continued until a temperature of 260 to 270°C was reached and maintained for 1 hour. The melted rosin was allowed to cool down to 200°C. Once this temperature was reached, 14 parts of tris-(2-hydroxyethyl) isocyanurate (THEIC) (from Sunshield Chemicals Ltd., Mumbai, India) and 0.1 parts of magnesium oxide (from Magnesium & Allied Products, Karnataka, India) were added. The reaction mixture was allowed to further cool down to 140°C. Then 16 parts of maleic acid anhydride (from Jaidip Agencies (MFG: Taiwan Prosperity)) were added stepwise in order to keep the temperature below 160°C. The addition of maleic acid anhydride was completed within 1 hour. During this stage, only reaction step a) took place so as to form the first reaction product, because the rosin did not react at this temperature. In order to start the reaction step b), the temperature of the reaction mixture was then raised slowly to 230°C and maintained for three hours. After cooling down the material was discharged. The resulting product had an acid value of 169.6 mg KOH/g, a softening point of 135 to 138°C, a weight-averaged molecular weight Mw of 3,500 Da and a number-averaged molecular weight Mn that equals 500 Da.

Step c) was then performed, i.e. the condensation of the second reaction product obtained in example 1 with a diamine compound, as follows: 72 parts of the second reaction product obtained in step b) and 28 parts Jeffamine D-230 (from Huntsman, Salt Lake City, United States of America) were charged into a reactor. The temperature was increased until 230 to 240°C were reached. The mixture was maintained at this temperature for 8 to 10 hours. The acid value of the mixture was controlled every hour until it was below 25 mg KOH/g. The product was then allowed to cool down and was discharged from the vessel. The resulting product had an acid value of 19.1 mg KOH/g, an amine value of 23.4 mg KOH/g, a softening point of 112 to 115°C and a Mw of 2,400 Da and Mn of 900 Da.

### Example 2

### (Step d), i.e. reaction of the product of example 1 with Epoxy Resin (RD-19) so as to obtain an inert resin polymer without photoinitiator modification - resin type 1)

Step d) was then performed by charging 79.85 parts of the reaction product obtained in example 1 into a reactor. The temperature was raised to 180°C, then 20 parts of IPOX RD-19 (from IPOX Chemicals, Laupheim, Germany) were added stepwise. The temperature was maintained for two hours, then 0.1 parts hydroquinone monomethylether (in the following described as MeHQ) (from Clean Science And Technology Ltd., Pune, India) and 0.05 parts of phenothiazine (from Solvay Speciality Chemicals Asia) were added. After cooling down, the product was discharged from the vessel. The final product (Resin 1) had an acid value of 2.7 mg KOH/g, an amine value of 9.1 g KOH/g, a softening point of 80 to 83°C and a Mw of 8,200 Da and Mn of 1,700 Da.

### Example 3

### (Step d), i.e. reaction of the product of example 1 wit Epoxy Resin (ESO) so as to obtain an inert resin polymer without photoinitiator modification - resin type 2)

Step d) was then performed by charging 79.85 parts of the reaction product obtained in example 1 into a reactor. The temperature was raised to 180°C, then 20 parts of epoxidized soybean oil (Makwell Organics Pvt. Ltd., Mumbai, India) were added stepwise. The temperature was maintained for two hours, then 0.1 parts MeHQ and 0.05 parts of phenothiazine were added. After cooling down the product was discharged from the vessel. The final product (Resin-2) had an acid value of 3.5 mg KOH/g, an amine value of 9.6 mg KOH/g, a softening point of 92 to 95°C, a Mw of 7,100 Da and a Mn of 1,500 Da.

### Examples 4a and 4b and Comparative Example 1

### (Varnish preparation)

Resin-1 and Resin-2 were used to prepare a UV curable varnish. 50.00 parts of the Resin 1 (prepared in example 2) as example 4a and of the Resin 2 (prepared in example 3) as example 4b, respectively, were dissolved at 120°C for 30 minutes in 49.89 parts three times ethoxylated 1,1,1-trimethylol propane triacrylate (SR454 from Sartomer, Exton, United States of America), 0.01 parts BHT (from Lanxess, Leverkusen, Germany) and 0.10 parts MeHQ so as to obtain Varnish-1 in example 4a and Varnish-2 in example 4b. For comparison with a state of the art resin a Varnish-0 of Cellulose acetate butyrate (CAB-551-0.01 from Eastman, Kingsport, Tennessee, United States of America, in the following abbreviated with CAB) was prepared. Because of the higher molecular weight of CAB and thereof a much higher viscosity when diluted in SR454 the concentration of the resin needed to be reduced. Hence for the reference sample 33.00 parts of CAB was dissolved employing the very same process parameters in 66.89 parts SR454, 0.01 parts BHT and 0.10 parts MeHQ. Table 1 shows the resulting viscosity of the varnishes.

**Table 1: Viscosities of the polymers of the comparative example and of the examples 4 and 3 dissolved in eoTMPTA**

| | Varnish 0 (Comparative Example 1) | Varnish 1 (Example 4a) | Varnish 2 (Example 4b) |
|---|---|---|---|
| Resin and concentration | CAB / 33% by weight | Resin 1 / 50% by weight | Resin 2 / 50% by weight |
| Viscosity [Pa·s] | 112 | 54 | 84 |

### Examples 5a and 5b and Comparative Example 2

### (Ink formulation and adhesion tests)

The varnishes 1 and 2 from examples 4a and 4b have been used to produce low pigmented ink formulations 1 and 2 according to examples 5a and 5b. Moreover, the Varnish 0 from comparative example 1 has been used to produce an ink formulation 0 according to comparative example 2. The test inks have been prepared as follows: 47% by weight of the respective varnish was mixed with 40% by weight of a transparent filler paste prepared from 34.0 parts of a chlorinated polyester UHVO-15113 (from hubergroup India pvt. Itd., Vapi, India), 0.1 parts BHT, 14.9 parts SR454, 3.0 parts Solsperse 36000 (from Lubrizol, Wickliffe, United States of America) 29.0 parts ASP 200 (from BASF, Ludwigshafen, Germany) and 19.0 parts Finntalk M05 N-SQ (from Elements, London, United Kingdom), before 5% by weight of a pigment blue 15:3 UV ink concentrate HUVC-171574 (from hubergroup India pvt. Itd., Vapi, India) and then 8% by weight of a photoinitiator solution prepared from 28.8 parts SR454, 0.3 parts BHT, 26.4 parts Omnipol ASA (from IGM resins, Waalwijk, Netherlands), 4.5 parts Omnicure 1173 (from IGM resins), 17.3 parts Omnicure 369 (from IGM resins), 22.7 parts Omnicure ITX (from IGM resins) were added. The compositions of these printing inks are shown in table 2.

The ink formulations of examples 5a and 5b and of the example 2 have been tested for adhesion applying the tape test described above. For this purpose, the ink formulations have been printed on EWR57 (from Jindal Poly Films, New Delhi, India) and PET (from Petroplast GmbH, Neuss, Germany) films as follows: The printed layer were applied to the BOPP surface of EWR57 films and a PET film with help of a Printability Testing System (from Prüfbau GmbH, Peissenberg, Germany). The grammature of the printed layers was calculated determining the weight of the printing cylinder before and after the layer application with an analytical scale. The printed layers were subsequently after the printing cured with help of a UV drier (Grafica Flextronia, Mumbai, India) equipped with a medium pressure mercury vapor lamp. The printed layers had a grammature of 2.0 +/-0.1 g/m² and had been cured with a medium pressure mercury vapor lamp at a dosage of 280 mJ/cm². The dosage was determined with help of a Power Puck, namely with a high energy UV radiometer, such as the UV Power Puck S/N 2842 (from Blaze technology Pte. Ltd., Singapore).

**Table 2: Compositions of inks 0, 1 and 2**

| | Ink 0 (Comparative Example 1) | Ink 1 (Example 5a) | Ink 2 (Example 5b) |
|---|---|---|---|
| | Varnish 0 | Varnish 1 | Varnish 2 |
| Varnish | 47% | 47% | 47% |
| Transparent filler paste | 40% | 40% | 40% |
| HUVC-171574 (hubergroup) | 5% | 5% | 5% |
| Photoinitiator solution | 8% | 8% | 8% |
| Total | 100% | 100% | 100% |

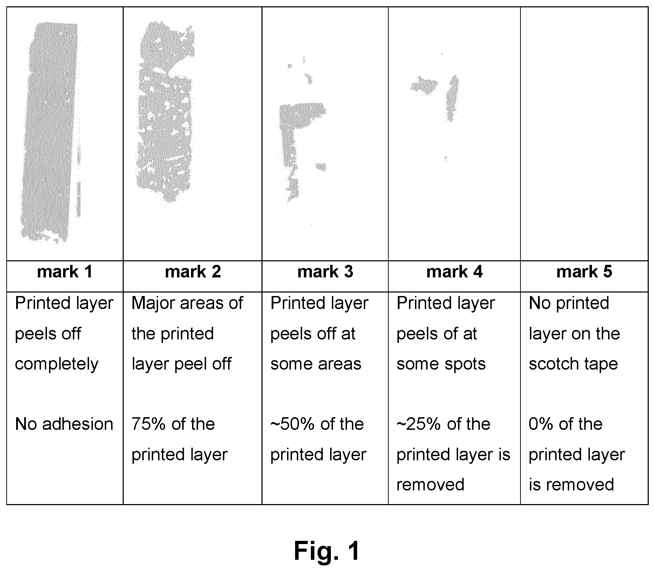

Then, the adhesions of the printed layers on the plastic surfaces of BOPP and PET were tested with a tape test. For the tape test, two different scotch tapes with a normalized adhesion strength were used: Tesa tape 4104 PVC transparent, a PVC film with an adhesive layer from natural rubber and a normalized adhesion strength on steel of 2.3 N/cm and Tesa tape 4204 PP PV 5, a PP film with an adhesive acrylic adhesive layer and a normalized adhesion strength on steel of 3.2 N/cm (from Baiersdorf AG, Norderstedt, Germany). A strip of the tape was placed on the printed layer in 90 degrees angle to the printing direction. A proper adhesion of the tape on the printed layer was ensured by sweeping three times with the thumb at constant pressure over the strip of tape. The loose end of the tape was then lifted as fast as possible in an angle of 90° to the surface. After the scotch tape was removed the resulting pattern of the printed layer on the scotch tape was evaluated with marks from 1 (no adhesion) to 5 (excellent adhesion). Figure 1 shows example of the marks that was used to evaluate the resulting pattern.

**Table 3: Adhesion results employing the tape test to the printed layers on EWR57(BOPP) and PET films.**

| | | Ink-0 (Comparative Example) | Ink-1 (Example 5a) | Ink (Example 5b) |
|---|---|---|---|---|
| Printed layer on EWR57 film | | | | |
| Tesa tape 4104 | Immediately after print | 0 | 2 | 4 |
| Tesa tape 4204 | 24h after print | 1 | 2 | 4 |

| Printed layer on PET film | | | | |
|---|---|---|---|---|
| Tesa tape 4104 | Immediately after print | 5 | 5 | 5 |
| Tesa tape 4204 | 24h after print | 5 | 5 | 5 |

These results show that the adhesion on EWR57 could be significantly improved especially with Resin 2 as obtained in example 3 and as included in varnish 2 of example 4b and in the printing ink of example 5b.

### Example 6

### (Intermediate product 2 produced with steps a) to c))

66 parts Brazilian gum rosin were charged into a vessel and heated until the rosin was molten. The agitator was started. Heating was continued until the temperature reached 260 to 270°C and this temperature was maintained for 1 hour. The melted rosin was allowed to cool down to 200°C. Once this temperature was achieved, 18 parts of tris-(2-hydroxyethyl) isocyanurate (THEIC) and 0.1 parts of magnesium oxide were added. The reaction mixture was allowed to further cool down to 140°C. Then, 16 parts of maleic acid anhydride were added stepwise in order to keep the temperature below 160°C. Addition of maleic acid anhydride was completed within 1 hour. The temperature was then raised slowly to 230°C and maintained for three hours. After cooling down, the material was discharged. The resulting product had an acid value of 165 mg KOH/g, a softening point of 141 to 144°C and a Mw of 2,400 Da and Mn of 500 Da.

Then, step c), i.e. the condensation product of the product obtained above with a diamine compound, was performed as follows: 75 parts of step 1 reaction product and 25 parts Jeffamine D-230 were charged into a reactor. The temperature was increased until a temperature of 230 to 240°C was reached. The mixture was maintained at this temperature for 8 to 10 hours. The acid value of the mixture was controlled every hour until it is below 15 mg KOH/g. The product was then allowed to cool down and was discharged from the vessel. The resulting product has an acid value of 12.0 mg KOH/g, an amine value of 10.1 mg KOH/g, a softening point of 125 to 128°C and a Mw of 2,400 Da and Mn of 500 Da.

### Example 7

### (Step d), i.e. reaction of the product of example 6 with Epoxy Resin (BPA) so as to obtain an inert resin polymer without photoinitiator modification - resin type 3)

80 parts of reaction product of example 6 were charged into a reactor. The temperature was raised to 180°C, then 20 parts bisphenol A diglycidylether (from Aditya birla, Mumbai, India) were added stepwise. The temperature was maintained for two hours, then 0.1 parts MeHQ and 0.05 parts of phenothiazine were added. After cooling down, the product is discharged from the vessel. The final product (Resin 3) had an acid value of 1.6 mg KOH/g, an amine value of 4.9 mg KOH/g, a softening point of 120 to 123°C and a Mw of 9,700 Da and Mn of 2,000 Da.

### Example 8

### (Step d), i.e. reaction of the product of example 6 with Epoxy Resin (BPA, bisphenol-A diglycidyl ether, and ESO, epoxidized soybean oil) so as to obtain an inert resin polymer without photoinitiator modification - resin type 4)

80 parts of reaction product of example 6 were charged into a reactor. The temperature was raised to 180°C, then 10 parts bisphenol A diglycidylether and 10 parts epoxydized soybean oil were added stepwise. The temperature was maintained for two hours, then 0.1 parts MeHQ and 0.05 parts of phenothiazine were added. After cooling down, the product was discharged from the vessel. The final product (Resin-4) had an acid value of 1.0 mg KOH/g, an amine value of 4.1 mg KOH/g, a softening point of 115 to 118°C and a Mw of 12,400 and Mn of 2,100.

### Example 9

### (Step d), i.e. reaction of the product of example 6 with Epoxy Resin (ESO) so as to obtain an inert resin polymer without photoinitiator modification - resin type 5)

80 parts of reaction product of example 6 were charged into a reactor. The temperature was raised to 180°C, then 10 parts epoxydized soybean oil (ESO) were added stepwise. The temperature was maintained for two hours, then 0.1 parts (MeHQ) and 0.05 parts of phenothiazine were added. After cooling down, the product was discharged from the vessel. The final product (Resin 5) had an acid value of 1.1 mg KOH/g, an amine value of 6.1 mg KOH/g, a softening point of 97 to 100°C and a Mw of 7,700 and Mn of 1,900.

### Examples 10a, 10b and 10c and comparative example 1

### (Varnish preparation)

Resin 3, Resin 4 and Resin 5 have been used to prepare UV curable varnishes in examples 10a, 10b and 10c. 50.00 parts of the respective resin have been dissolved at 120°C for 30 minutes in 49.89 parts of SR454, 0.01 parts BHT and 0.10 parts MeHQ. For comparison with a state of the art resin a varnish of CAB was prepared as comparative example 1 as Varnish-0b. Because of the higher molecular weight of CAB and thereof a much higher viscosity when diluted in eoTMPTA (SR454) the concentration of the resin needed to be reduced. Hence for the reference 33.00 parts of CAB have been dissolved employing the very same process parameters in 66.89 parts SR454, 0.01 parts BHT and 0.10 parts MeHQ. Table 4 shows the resulting viscosity of the varnish.

**Table 4: Viscosities of the polymers of the comparative example 1 and of the examples 10a and 10b dissolved in eoTMPTA (SR454)**

| Varnish preparation | Varnish 0 (Comparative Example 1) | Varnish 3 (Example 10a) | Varnish 4 (Example 10b) | Varnish 5 (Example 10c) |
|---|---|---|---|---|
| Resin & concentration | CAB / 33% | Resin 3 / 50% | Resin 4 / 50% | Resin 5 / 50% |
| Viscosity [Pa·s] | 112 | 75 | 72 | 76 |

### Example 11 : Ink formulations printed on EWR57 and PET films for adhesion and gloss testings.

The varnish samples prepared according to examples 10a, 10b and 10c as well as of comparative example 1 have been used to prepare high pigmented inks to print on EWR57 and PET films. The printed and cured print layers have been tested for adhesion. Additionally, the gloss has been determined as described above. The pigment has been dispersed using a three roller mill. The formulations are shown in table 5.

**Table 5: Formulation of the test ink**

| | Ink 0b | Ink 3 | Ink 4 | Ink 5 |
|---|---|---|---|---|
| | Varnish-0b of Comparative Example 1 | Varnish-3 of Example 10a | Varnish-4 of Example 10b | Varnish-5 of Example 10c |
| Varnish | 56.2 | 56.2 | 56.2 | 56.2 |
| SR454 (from Sartomer) | 8.2 | 8.2 | 8.2 | 8.2 |
| Solsperse 36000 (from Lubrizpol) | 0.3 | 0.3 | 0.3 | 0.3 |
| Omnipol ASA (IGM resins) | 2.9 | 2.9 | 2.9 | 2.9 |
| Omnicure 1173 (IGM resins) | 0.5 | 0.5 | 0.5 | 0.5 |
| Pigment blue 15.3 (from hubergroup India Pvt. Ltd.) | 21.5 | 21.5 | 21.5 | 21.5 |
| ASP 200 (from BASF) | 2.9 | 2.9 | 2.9 | 2.9 |
| Finntalk M05 N-SQ (Elementis) | 1.9 | 1.9 | 1.9 | 1.9 |
| Aerosil R 972 V (from Evonik) | 1.2 | 1.2 | 1.2 | 1.2 |
| Omnicure 369 (from IGM resins) | 1.9 | 1.9 | 1.9 | 1.9 |
| Omnicure ITX (from IGM resins) | 2.5 | 2.5 | 2.5 | 2.5 |
| Total | 100.0 | 100.0 | 100.0 | 100.0 |

With all these printing inks samples printed on EWR57 and PET films, an adhesion test and a gloss test have been performed. While the adhesion test was performed as described above, the gloss test has been performed by employing a microgloss device from BYK, Wesel, Germany, measuring the gloss at 60°. The gloss was determined at ten different spots on the printed sample and the mean value was calculated. The obtained results are summarized in table 6.

**Table 6: Summary of adhesion properties and the gloss tests**

| | | Ink-0b (Comparative Example 1) | Ink-3 (Example 10a) | Ink-4 (Example 10b) | Ink-5 (Example 10c) |
|---|---|---|---|---|---|
| Printed layer on EWR57(BOPP) films | | | | | |
| Gloss [%] | | 35.1 | 55.7 | 59.2 | 60.7 |

| Adhesion Test Tape test - mark [1] very poor [5] excellent | | | | | |
|---|---|---|---|---|---|
| Tesa tape 4104 | Immediately after print | 1 | 5 | 5 | 5 |
| | After 24h | 3 | 5 | 5 | 5 |
| Tesa tape 4204 | Immediately after print | 1 | 4 | 4 | 5 |
| | After 24h | 1 | 5 | 4 | 5 |

| Printed layer on PET films | | | | | |
|---|---|---|---|---|---|
| Gloss [%] | | 42.2 | 57.6 | 67.1 | 69.3 |

| Adhesion Test Tape test - mark [1] very poor [5] excellent | | | | | |
|---|---|---|---|---|---|
| Tesa tape 4104 | Immediately after print | 1 | 4 | 5 | 5 |
| | After 24h | 2 | 5 | 5 | 5 |
| Tesa tape 4204 | Immediately after print | 1 | 3 | 2 | 2 |
| | After 24h | 2 | 3 | 2 | 2 |

### Example 12

### (2-carboxymethoxy thioxanthone (9.6% CMTX)-modified resin - Resin type 6)

53.7 parts Brazilian gum rosin was charged into a vessel and heated until rosin was molten. The agitator was started. Heating was continued until a temperature of 260 to 270°C was reached and the temperature was maintained for 1 hour. The molten rosin was allowed to cool down to 200°C. Once this temperature was achieved, 14.2 parts 2-carboxymethoxythioxanthone (in the following described as CMTX) (Tianjin Boguang Chemical Co., Ltd., Tianjin City, China), 17.3 parts tris-(2-hydroxyethyl) isocyanurate (THEIC) and 0.1 parts of magnesium oxide were added. The reaction mixture was allowed to further cool down to 140°C. Then, 14.6 parts of maleic acid anhydride were added stepwise in order to keep the temperature below 160°C. Addition of maleic acid anhydride was completed within 1 hour. During this stage, only reaction step a) took place so as to form the first reaction product, because the rosin did not react at this temperature. In order to start the reaction step b), the temperature of the reaction mixture was then raised to 230°C and maintained for three hours. After cooling down the material was discharged. The resulting product had an acid value of 106.4 mg KOH/g, a softening point of 151 to 154°C and a Mw of 3,200 Da and Mn of 800 Da.

Step c), i.e. the condensation of the product obtained above with a diamine compound, was performed as follows: 80 parts of the product obtained above and 20 parts Jeffamine D-230 were charged into a reactor. The temperature was increased until the temperature reached 230 to 240°C. The mixture was maintained at this temperature for 8 to 10 hours. The acid value of the mixture was controlled every hour until it was below 25 mg KOH/g. The product was then allowed to cool down and it was discharged from the vessel. The resulting product had an acid value of 17.2 mg KOH/g, an amine value of 7.2 mg KOH/g, a softening point of 125 to 128°C and a Mw of 3,600 Da and Mn of 1,300 Da.

Step d), i.e. the reaction of the product obtained in step c) with epoxidized soya bean oil, was performed as follows: 85 parts product of step 2 were charged into a reactor. The temperature was raised to 240°C, then 15 parts epoxidized soybean oil were added stepwise. The temperature was maintained for two hours, then 0.1 parts MeHQ) and 0.05 parts phenothiazine were added. After cooling down, the product was discharged from the vessel. The final product had an acid value of 3.0 mg KOH/g, an amine value of 3.6 mg KOH/g, a softening point of 107 to 110°C and a Mw of 8,700 Da and Mn of 1,600 Da.

The dissolution of 50 parts of the polymer in 49.8 parts eoTMPTA, 0.1 parts BHT and 0.1 parts MeHQ yielded a varnish with a viscosity of 150 Pa·s.

## Claims

1. A polymer being obtainable by a method comprising the following steps:
a) reacting a₁) at least one compound being selected from the group consisting of polyhydroxy-functionalized compounds, polyepoxy-functionalized compounds, polythiol-functionalized compounds, compounds comprising at least one group being selected from hydroxy groups, epoxy groups and thiol groups and at least a different group being selected from hydroxy groups, epoxy groups and thiol groups and arbitrary combinations of two or more thereof with a₂) at least one α,β-unsaturated carboxylic acid comprising two or more carboxylic groups and/or at least one anhydride thereof so as to obtain a first reaction product,
b) reacting b₁) the first reaction product with b₂) at least one rosin acid containing at least two conjugated double bonds so as to obtain a second reaction product,
c) reacting c₁) the second reaction product with c₂) at least one amine compound comprising two or more primary and/or secondary amine groups so as to obtain a third reaction product,
d) reacting d₁) the third reaction product with d₂) at least one epoxy compound so as to obtain the polymer,
wherein the polymer does not contain any terminal vinyl groups, does not contain any terminal acrylic group and does not contain any terminal methacrylic group.

2. The polymer in accordance with claim 1, wherein the polymer does not contain any terminal carbon-carbon double bond.

3. The polymer in accordance with claim 1 or 2, wherein the at least one polyhydroxy-functionalized compound a₁) is selected from the group consisting of 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols and arbitrary combinations of two or more of the aforementioned compounds.

4. The polymer in accordance with any of the preceding claims, wherein the at least one polyepoxy-functionalized compound a₁) is selected from the group consisting of polyglycidylethers, bisphenol A diglycidylethers, bisphenol F diglycidylethers, 3,4-epoxycyclohexylmethyl-3',4'-epoxy-cyclohexane carboxylates, epoxyphenol novolaks, 1,4-butanediol diglycidylethers, neopentylglycol diglycidylethers, 2-ethylhexyl glycidylethers, 1,6-hexandiol diglycidylethers, polyoxypropylenglycol diglycidylethers, trimethylolpropane polyglycidylethers, poly(tetramethylene oxide) diglycidylethers, C₁₂₋₁₄-glycidylethers, C₁₂₋₁₄-polyethyleneoxide-glycidylethers, polyglycerol-3-polyglycidylethers, glycerin polyglycidylethers, pentaerythrol polyglycidylethers, trimethylolpropane polyglycidylethers, polyglycidylether ethoxylated trimethylolpropanes, hydrated bisphenol A-diglycidylethers, hydrated bisphenol F-diglycidylethers, triglycidyl isocyanurates, novolac resins and arbitrary combinations of two or more of the aforementioned polyepoxy-functionalized compounds.

5. The polymer in accordance with any of the preceding claims, wherein the at least one polythiol-functionalized compound is selected from the group consisting of tetrahydrothiophenes, 1,4-dithienes, esters of 3-mercaptopropionic acid, esters of thioglycolic acid, esters of 3-mercapto butyric acid, dithiols, trithiols and arbitrary combinations of two or more of the aforementioned polythiol compounds.

6. The polymer in accordance with claim 5, wherein the at least one polythiol-functionalized compound is selected from the group consisting of 3,4-dimer-captotetrahydrothiophene, 3,4-di-(mercaptomethyl)tetrahydrothiophene, 3,4-di (mercaptoethylthio) tetrahydrothiophene, 3,4-di-(mercaptoethylthiomethyl)tetrahydrothiophene, 2,5 di (mercaptomethyl) tetrahydrothiophene, 2,5 di-(mercaptoethylthiomethyl)tetrahydrothiophene, 2,3 dimercaptomethyl-1,4-dithiane, 2,5 dimercaptomethyl-1,4-dithiane, 2,3-di-(mercaptoethylthiomethyl)-1,4-dithiane, 2,5 di-(mercaptoethyl thiomethyl)-1,4-dithiane, 2,3-di-(mercaptopropylthiomethyl)-1,4 dithiane, 2,5-di-(mercaptopropylthiomethyl)-1,4-dithiane, 2,3-di-(mercaptoethylthioethyl)-1,4-dithiane, esters of 3-mercaptopropionic acid with the polyols 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris-(2-hydroxyethyl)isocyanurate, neopentyl glycol, ethylene glycol, diethylene glycol, propylene glycol, methylpropanediol, polyether polyols, ethoxylated or propoxylated branched polyols; esters of thioglycolic acid with the polyols 1,2,4-butanetriol, 1,2,6-hexanetriol, 3-methyl-pentane-1,3,5-triol, diglycerin, dipentaerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris-(2-hydroxyethyl)isocyanurate, neopentyl glycol, ethylene glycol, diethylene glycol, propylene glycol, methylpropanediol, polyether polyols, ethoxylated or propoxylated branched polyols; esters of 3-mercaptopropionic acid with the polyols 1,2,4-butanetriol, 1,2,6-hexanetriol, 3-methyl-pentane-1,3,5-triol, di-glycerin, dipen-taerythritol, di-trimethylol propane, erythritol, fucitol, galactitol, glycerin, hydroxymethyl hexanediol, iditol, inositol, lactitol, maltitol, maltotetraitol, maltotriitol, mannitol, pentaerythritol, polyglycitol, ribitol, threitol, arabitol, trimethylol butane, trimethylol ethane, trimethylol hexane, trimethylol octane, trimethylol propane, tripentaerythritol, volemitol, tris (2-hydroxyethyl)isocyanurate, neopentyl glycol, ethylene glycol, diethylene glycol, propylene glycol, methylpropanediol, polyether polyols, ethoxylated or propoxylated branched polyols; 1,2-ethanedithiol, 1, 2-propanedithiol, 1,3-propanedithiol, 1,4-butanedithiol, 1,6-hexanedithiol, 1,7-heptanedithiol, 1,8-octanedithiol, 1,9-nonanedithiol, 1,10-decanedithiol, 1, 12-dodecanedithiol, 2, 2-dimethyl-1,3-propanedithiol, 3-methyl-1,5-pentanedithiol, 2-methyl-1,8-octanedithiol, 1, 4-cyclohexanedithiol, 1,4-bis (mercaptomethyl) cyclohexane, 1,1-cyclohexanedithiol, 1,2-cyclohexanedithiol, bicyclo [2, 2, 1] heptexo-cis-2, 3-dithiol, 1,1-bis (mercaptomethyl) cyclohexane, bis (2-mercaptoethyl) ether, 1,4-dithioerythritol, 1,1,1-tris (mercaptomethyl)-ethane, 2-ethyl-2-mercaptomethyl-1, 3-propanedithiol, 1, 2, 3-propanetrithiol and arbitrary combinations of two or more of the aforementioned polythiol compounds.

7. The polymer in accordance with any of the preceding claims, wherein the at least one α,β-unsaturated carboxylic acid comprising two or more carboxylic groups a₂) is selected from the group consisting of maleic acid, fumaric acid, acetylenedicarboxylic acid, glutaconic acid, traumatic acid, muconic acid, glutinic acid, citraconic acid, mesaconic acid, itaconic acid and arbitrary combinations of two or more of the aforementioned carboxylic acids.

8. The polymer in accordance with any of the preceding claims, wherein the at least one anhydride a₂) is an anhydride of an α,β-unsaturated carboxylic acid being selected from the group consisting of maleic acid, fumaric acid, acetylenedicarboxylic acid, glutaconic acid, traumatic acid, muconic acid, glutinic acid, citraconic acid, mesaconic acid, itaconic acid and arbitrary combinations of two or more of the aforementioned carboxylic acids.

9. The polymer in accordance with any of the preceding claims, wherein the at least one rosin acid b₂) is selected from the group consisting of pimaric acid, neoabietic acid, palustric acid, abietic acid, levopimaric acid and arbitrary combinations of two or more of the aforementioned carboxylic acids.

10. The polymer in accordance with any of the preceding claims, wherein the at least one amine compound comprising two or more primary and/or secondary amine groups c₂) is selected from the group consisting of aromatic, aliphatic or cycloaliphatic diamines, alkoxylated polyamines, polyamines, polyethylenimines, polyetheramines, polyesteramines, polyamidoamines, polyureamines and arbitrary combinations of two or more of the aforementioned compounds.

11. The polymer in accordance with any of the preceding claims, wherein the at least one epoxy compound d₂) is selected from the group consisting of polyether epoxy compounds, glycidyl ether compounds, glycidyl ester compounds, epoxidized vegetable oils, phenol novolak resins, epoxy phenol novolak resins, aromatic epoxy resins, aliphatic epoxy resins and arbitrary combinations of two or more of the aforementioned compounds.

12. The polymer in accordance with any of the preceding claims, wherein the at least one epoxy compound d₂) is selected from the group consisting of epoxidized soybean oil comprising preferably 4 to 6 epoxy groups, epoxidized castor oil, epoxidized linseed oil, vernolic acid, bisphenol A diglycidylether, bisphenol F diglycidylether, 3,4-epoxycyclohexylmethyl-3',4'-epoxy-cyclohexane carboxylate, epoxyphenol novolak, 1,4-butanediol diglycidylether, neopentylglycol diglycidylether, 2-ethylhexyl glycidylether, 1,6-hexandiol diglycidylether, polyoxypropylenglycol diglycidylether, trimethylolpropane polyglycidylether, poly(tetramethylene-oxid) diglycidylether, C₁₂₋₁₄-glycidylether, C₁₂₋₁₄-polyethyleneoxide-glycidylether, polyglycerol-3-polyglycidylether, glycerin polyglycidylether, pentaerythrol polyglycidylether, trimethylolpropane polyglycidylether, ethoxylated trimethylolpropane polyglycidylether, hydrated Bisphenol A-diglycidylether, hydrated Bisphenol F-diglycidylether, triglycidyl isocyanurate and arbitrary combinations of two or more of the aforementioned compounds.

13. The polymer in accordance with any of the preceding claims, wherein component a₂) in step a) also comprises one or more photoinitiator compounds with a functional group being selected from the group consisting of carboxylic groups, acid chloride groups, hydroxyl groups, primary amino groups, halogen groups, epoxy groups, isocyanate groups and arbitrary combinations of two or more of the aforementioned functional groups, wherein preferably the one or more photoinitiator compounds are selected from the group consisting of benzophenones and thioxanthones being functionalized with an aforementioned functional group.

14. The polymer in accordance with any of the preceding claims, which fulfils one or more of the subsequent criteria:
i) having a weight-averaged molecular weight measured by gel permeation chromatography of 600 to 50,000 g/mol, preferably of 800 to 25,000 g/mol and more preferably of 1,000 to 20,000 g/mol,
ii) having a number-averaged molecular weight measured by gel permeation chromatography of 100 to 30,000 g/mol, preferably of 500 to 20,000 g/mol and more preferably of 700 to 10,000 g/mol,
iii) having an acid number of 0 to 50 mg KOH/g, preferably of 0 to 20 mg KOH/g and more preferably of 1 to 10 mg KOH/g,
iv) having an amine number of 0 to 100 mg KOH/g, preferably of 0 to 50 mg KOH/g and more preferably of 2 to 20 mg KOH/g
v) having a softening point of 40 to 200°C, preferably of 70 to 160°C and more preferably of 80 to 150°C,
vi) having a viscosity when diluted in 50% three times ethoxylated 1,1,1 trimethylol propane triacrylate of 1 to 300 Pa·s, preferably of 10 to 200 Pa·s and more preferably of 50 to 150 Pa·s, wherein the weight-averaged molecular weight, number-averaged molecular weight, acid number, amine number, softening point and viscosity are determined using the methods disclosed in the description.

15. A method for producing a polymer in accordance with any of the preceding claims, comprising the steps of:
a) reacting a₁) at least one compound being selected from the group consisting of polyhydroxy-functionalized compounds, polyepoxy-functionalized compounds, polythiol-functionalized compounds, compounds comprising at least one group being selected from hydroxy groups, epoxy groups and thiol groups and at least a different group being selected from hydroxy groups, epoxy groups and thiol groups and arbitrary combinations of two or more thereof with a₂) at least one α,β-unsaturated carboxylic acid comprising two or more carboxylic groups and/or at least one anhydride thereof so as to obtain a first reaction product,
b) reacting b₁) the first reaction product with b₂) at least one rosin acid containing at least two conjugated double bonds so as to obtain a second reaction product,
c) reacting c₁) the second reaction product with c₂) at least one amine compound comprising two or more primary and/or secondary amine groups so as to obtain a third reaction product,
d) reacting d₁) the third reaction product with d₂) at least one epoxy compound so as to obtain the polymer,
so that the polymer does not contain any terminal carbon-carbon double bond.

16. A printing ink comprising:
- 1 to 50% by weight a polymer in accordance with any of claims 1 to 14,
- 10 to 60% by weight binder, preferably selected from the group consisting of (meth)acrylate monomers, oligomers and mixtures thereof, such as polyesteracrylates, polyetheracrylates and polyurethaneacrylates,
- 0 to 40% by weight solvent, preferably selected from the group consisting of water, hydrocarbons, ethers, esters, ketones and mixtures thereof,
- 0 to 40% by weight pigment, preferably selected from the group consisting of azopigments, carbon black, titanium dioxides and mixtures thereof,
- 0 to 20% by weight of one or more fillers, preferably selected from the group of silicates, talcum and mixtures thereof,
- 0 to 10% by weight of one or more additives, such as stabilizers, leveling agents and flow additives and
- 0 to 10% by weight of one or more photoinitiators and/or co-initiators.

17. A coating comprising:
- 1 to 50% by weight polymer in accordance with any of claims 1 to 14,
- 10 to 70% by weight binder, preferably selected from the group consisting of (meth)acrylate monomers, oligomers and mixtures thereof, such as polyesteracrylates, polyetheracrylates and polyurethaneacrylates,
- 0 to 40% by weight solvent, preferably being selected from the group consisting of water, hydrocarbons, ethers, esters, ketones and mixtures thereof,
- 0 to 30% by weight pigment and filler, preferably selected from the group consisting of azopigments, carbon black, titanium dioxide, silicates and mixtures thereof,
- 0 to 10% by weight of one or more additives and
- 0 to 10% by weight of one or more photoinitiators and/or co-initiators.

## Patentansprüche

1. Polymer, das durch ein Verfahren erhalten werden kann, umfassend die folgenden Schritte:
a) Reagieren von a₁) mindestens einer Verbindung, die ausgewählt ist aus der Gruppe, bestehend aus Polyhydroxy-funktionalisierten Verbindungen, Polyepoxy-funktionalisierten Verbindungen, Polythiol-funktionalisierten Verbindungen, Verbindungen, die mindestens eine Gruppe umfassen, die ausgewählt ist aus Hydroxygruppen, Epoxygruppen und Thiolgruppen und mindestens eine andere Gruppe, die aus Hydroxygruppen, Epoxygruppen und Thiolgruppen ausgewählt ist, und beliebigen Kombinationen von zwei oder mehreren davon mit a₂) mindestens einer α,β-ungesättigten Carbonsäure, die zwei oder mehrere Carboxylgruppen umfasst, und/oder mindestens einem Anhydrid davon, sodass ein erstes Reaktionsprodukt erhalten wird,
b) Reagieren von bi) dem ersten Reaktionsprodukt mit b₂) mindestens einer Kolophoniumsäure mit mindestens zwei konjugierten Doppelbindungen, um ein zweites Reaktionsprodukt zu erhalten,
c) Reagieren von c₁) dem zweiten Reaktionsprodukt mit c₂) mindestens einer Aminverbindung, die zwei oder mehr primäre und/oder sekundäre Amingruppen umfasst, um ein drittes Reaktionsprodukt zu erhalten,
d) Reagieren von d₁) dem dritten Reaktionsprodukt mit d₂) mindestens einer Epoxidverbindung, um das Polymer zu erhalten,
wobei das Polymer keine endständigen Vinylgruppen, keine endständigen Acrylgruppen und keine endständigen Methacrylgruppen enthält.

2. Polymer nach Anspruch 1, wobei das Polymer keine endständige Kohlenstoff-Kohlenstoff-Doppelbindung enthält.

3. Polymer nach Anspruch 1 oder 2, wobei die mindestens eine polyhydroxyfunktionalisierte Verbindung a₁) ausgewählt ist aus der Gruppe, bestehend aus 1,2,4-Butantriol, 1,2,6-Hexantriol, 3-Methylpentan-1,3,5-triol, Diglycerin, Dipentaerythritol, Di-Trimethylolpropan, Erythritol, Fucitol, Galactitol, Glycerin, Hydroxymethylhexandiol, Iditol, Inositol, Lactitol, Maltitol, Maltotetraitol, Maltotriitol, Mannitol, Pentaerythritol, Polyglycitol, Ribitol, Threitol, Arabitol, Trimethylol-Butan, Trimethylol-Ethan, Trimethylol-Hexan, Trimethylol-Octan, Trimethylol-Propan, Tripentaerythritol, Volemitol, Tris-(2-hydrox-yethyl)-isocyanurat, Neopentylglykol, Ethylenglykol, Diethylenglykol, Propylenglykol, Methylpropandiol, Polyetherpolyole, ethoxylierten oder propoxylierten verzweigten Polyolen und beliebigen Kombinationen aus zwei oder mehreren der vorgenannten Verbindungen.

4. Polymer nach einem der vorstehenden Ansprüche, wobei die mindestens eine polyepoxyfunktionalisierte Verbindung a₁) ausgewählt ist aus der Gruppe, bestehend aus Polyglycidylethern, Bisphenol-A-Diglycidylethern, Bisphenol-F-Diglycidylethern, 3,4-Epoxycyclohexylmethyl-3',4'-Epoxy-Cyclohexan-Carboxylate, Epoxyphenol-Novolake, 1,4-Butandiol-Diglycidylether, NeopentylglykolDiglycidylether, 2-Ethylhexyl-Glycidylether, 1,6-Hexandiol-Diglycidylether, Polyoxypropylenglykol-Diglycidylether, Trimethylolpropan-Polyglycidylether, Poly(tetramethylenoxid)-Diglycidylether, C₁₂₋₁₄-Glycidylether, C₁₂₋₁₄-Polyethylenoxid-Glycidylether, Polyglycerin-3-Polyglycidylether, Glycerin-Polyglycidylether, Pentaerythrol-Polyglycidylether, Trimethylolpropan-Polyglycidylether, polyglycidyletherethoxylierte Trimethylolpropane, hydratisierten Bisphenol-A-Diglycidylethern, hydratisierten Bisphenol-F-Diglycidylethern, Triglycidylisocyanuraten, Novolakharzen und beliebigen Kombinationen aus zwei oder mehreren der vorgenannten polyepoxyfunktionalisierten Verbindungen.

5. Polymer nach einem der vorstehenden Ansprüche, wobei die mindestens eine polythiolfunktionalisierte Verbindung ausgewählt ist aus der Gruppe, bestehend aus Tetrahydrothiophenen, 1,4-Dithienen, Estern der 3-Mercaptopropionsäure, Estern der Thioglykolsäure, Estern der 3-Mercapto-Buttersäure, Dithiolen, Trithiolen und beliebigen Kombinationen von zwei oder mehreren der vorgenannten Polythiolverbindungen.

6. Polymer nach Anspruch 5, wobei die mindestens eine polythiolfunktionalisierte Verbindung ausgewählt ist aus der Gruppe, bestehend aus 3,4-Dimercaptotetrahydrothiophen, 3,4-Di-(mercaptomethyl)tetrahydrothiophen, 3,4-Di-(mercaptoethylthio)tetrahydrothiophen, 3,4-Di-(mercaptoethylthiomethyl)tetrahydrothiophen, 2,5-Di-(mercaptomethyl)tetrahydrothiophen, 2,5-Di-(mercaptoethylthiomethyl)tetrahydrothiophen, 2,3-Dimercaptomethyl-1,4-dithian, 2,5-Dimercaptomethyl-1,4-dithian, 2,3-Di-(mercaptoethylthiomethyl)-1,4-dithian, 2,5-Di-(mercaptoethylthiomethyl)-1,4-dithian, 2,3-Di-(mercaptopropylthiomethyl)-1,4-dithian, 2,5-Di-(mercaptopropylthiomethyl)-1,4-dithian, 2,3-Di-(mercaptoethylthioethyl)-1,4-Dithian, Ester der 3-mer-Captopropionsäure mit den Polyolen 1,2,4-Butantriol, 1,2,6-Hexantriol, 3-Methylpentan-1,3,5-Triol, Diglycerin, Dipentaerythrit, Di-trimethylolpropan, Erythrit, Fucit, Galactit, Glycerin, Hydroxymethylhexandiol, Iditol, Inositol, Lactitol, Maltitol, Maltotetraitol, Maltotriitol, Mannitol, Pentaerythritol, Polyglycitol, Ribitol, Threitol, Arabitol, Trimethylolbutan, Trimethylolethan, Trimethylolhexan, Trimethyloloctan, Trimethylolpropan, Tripentaerythrit, Volemitol, Tris-(2-hydroxyethyl)isocyanurat, Neopentylglykol, Ethylenglykol, Diethylenglykol, Propylenglykol, Methylpropandiol, polyetherpolyolen, ethoxylierten oder propoxylierten verzweigten Polyolen; Estern der Thioglykolsäure mit den Polyolen 1,2,4-Butantriol, 1,2,6-Hexantriol, 3-Methylpentan-1,3,5-Triol, Diglycerin, Dipentaerythritol, Di-Trimethylolpropan, Erythritol, Fucitol, Galactitol, Glycerin, Hydroxymethylhexandiol, Iditol, Inositol, Lactitol, Maltitol, Maltotetraitol, Maltotriitol, Mannitol, Pentaerythritol, Polyglycitol, Ribitol, Threitol, Arabitol, Trimethylolbutan, Trimethylolethan, Trimethylolhexan, Trimethylol-Octan, Trimethylol-Propan, Tripentaerythrit, Volemitol, Tris-(2-hydroxyethyl)isocyanurat, Neopentylglykol, Ethylenglykol, Diethylenglykol, Propylenglykol, Methylpropandiol, Polyetherpolyolen, ethoxylierten oder propoxylierten verzweigten Polyolen; Estern der 3-Mercaptopropionsäure mit den Polyolen 1,2,4-Butantriol, 1,2,6-Hexantriol, 3-Methylpentan-1,3,5-Triol, Di-Glycerin, Dipen-Taerythritol, Di-Trimethylolpropan, Erythrit, Fucit, Galactit, Glycerin, Hydroxymethylhexandiol, Idit, Inosit, Lactit, Maltit, Maltotetraitol, Maltotriit, Mannit, Pentaerythrit, Polyglycit, Ribit, Threitol, Arabit, Trimethylolbutan, Trimethylolethan, Trimethylolhexan, Trimethyloloctan, Trimethylolpropan, Tripentaerythrit, Volemitol, Tris(2- hydroxyethyl)isocyanurat, Neopentylglykol, Ethylenglykol, Diethylenglykol, Propylenglykol, Methylpropandiol, Polyetherpolyolen, ethoxylierten oder propoxylierten verzweigten Polyolen; 1,2-Ethandithiol, 1,2-Propandithiol, 1,3-Propandithiol, 1,4-Butandithiol, 1,6-Hexandithiol, 1,7-Heptandithiol, 1,8-Octandithiol, 1,9-Nonandithiol, 1,10-Decandithiol, 1, 12-Dodecandithiol, 2,2-Dimethyl-1,3-propandithiol, 3-Methyl-1,5-pentandithiol, 2-Methyl-1,8-octandithiol, 1,4-Cyclohexandithiol, 1,4-Bis(mercaptomethyl)cyclohex-an, 1,1-Cyclohexandithiol, 1,2-Cyclohexandithiol, Bicyclo[2,2,1]heptexo-cis-2,3-dithiol, 1,1-Bis(mercaptomethyl)cyclohexan, Bis(2-mercap-toethyl)ether, 1,4-Dithioerythrit, 1,1,1-Tris(mercaptomethyl)-ethan, 2-Ethyl-2-mercaptomethyl-1,3-propandithiol, 1,2,3-Propantrithiol und beliebigen Kombinationen von zwei oder mehreren der vorgenannten Polythiolverbindungen.

7. Polymer nach einem der vorstehenden Ansprüche, wobei die mindestens eine α, β-ungesättigte Carbonsäure, umfassend zwei oder mehr Carboxylgruppen a₂), ausgewählt ist aus der Gruppe, bestehend aus Maleinsäure, Fumarsäure, Acetylendicarbonsäure, Glutaconsäure, Traumsäure, Muconsäure, Glutinsäure, Citraconsäure, Mesaconsäure, Itaconsäure und beliebigen Kombinationen von zwei oder mehr der vorgenannten Carbonsäuren.

8. Polymer nach einem der vorstehenden Ansprüche, wobei das mindestens eine Anhydrid a₂) ein Anhydrid einer α, β-ungesättigten Carbonsäure ist, ausgewählt aus der Gruppe, bestehend aus Maleinsäure, Fumarsäure, Maleinsäure, Fumarsäure, Acetylendicarbonsäure, Glutaconsäure, Traumsäure, Muconsäure, Glutinsäure, Citraconsäure, Mesaconsäure, Itaconsäure und beliebigen Kombinationen von zwei oder mehreren der vorgenannten Carbonsäuren.

9. Polymer nach einem der vorstehenden Ansprüche, wobei die mindestens eine Kolophoniumsäure b₂) ausgewählt ist aus der Gruppe, bestehend aus Pimarsäure, Neoabietinsäure, Palustrinsäure, Abietinsäure, Levopimarsäure und beliebigen Kombinationen von zwei oder mehreren der vorgenannten Carbonsäuren.

10. Polymer nach einem der vorstehenden Ansprüche, wobei die mindestens eine Aminverbindung, umfassend zwei oder mehr primäre und/oder sekundäre Amingruppen c₂), ausgewählt ist aus der Gruppe, bestehend aus aromatischen, aliphatischen oder cycloaliphatischen Diaminen, alkoxylierten Polyaminen, Polyaminen, Polyethyleniminen, Polyetheraminen, Polyesteraminen, Polyamidoaminen, Polyureaminen und beliebigen Kombinationen von zwei oder mehreren der vorstehend genannten Verbindungen.

11. Polymer nach einem der vorstehenden Ansprüche, wobei die mindestens eine Epoxyverbindung d₂) ausgewählt ist aus der Gruppe, bestehend aus Polyetherepoxyverbindungen, Glycidyletherverbindungen, Glycidylesterverbindungen, epoxidierten Pflanzenölen, Phenolnovolakharzen, Epoxyphenolnovolakharzen, aromatischen Epoxyharzen, aliphatischen Epoxyharzen und beliebigen Kombinationen von zwei oder mehreren der vorstehend genannten Verbindungen.

12. Polymer nach einem der vorstehenden Ansprüche, wobei die mindestens eine Epoxyverbindung d₂) ausgewählt ist aus der Gruppe, bestehend aus epoxidiertem Sojabohnenöl, das vorzugsweise 4 bis 6 Epoxygruppen umfasst, epoxidiertem Rizinusöl, epoxidiertem Rizinusöl, Vernolsäure, Bisphenol A-Diglycidylether, Bisphenol F-Diglycidylether, 3,4-Epoxycyclohexylmethyl-3',4'-Epoxycyclohexancarboxylat, Epoxyphenolnovolak, 1,4-Butandioldiglycidylether, Neopentylglykoldiglycidylether, 2-Ethylhexyl-Glycidylether, 1,6-Hexandiol-Diglycidylether, Polyoxypropylenglykol-Diglycidylether, Trimethylolpropan-Polyglycidylether, Poly(tetramethylenoxid)-Diglycidylether, C₁₂₋₁₄-Glycidylether, C₁₂₋₁₄-Polyethylenoxid-Glycidylether, Polyglycerin-3-Polyglycidylether, Glycerin-Polyglycidylether, Pentaerythrolpolyglycidylether, Trimethylolpropanpolyglycidylether, ethoxyliertem Trimethylolpropanpolyglycidylether, hydratisiertem Bisphenol A-Diglycidylether, hydratisiertem Bisphenol F-Diglycidylether, Triglycidylisocyanurat und beliebigen Kombinationen aus zwei oder mehreren der vorgenannten Verbindungen.

13. Polymer nach einem der vorstehenden Ansprüche, wobei die Komponente a₂) in Schritt a) auch eine oder mehrere Photoinitiatorverbindungen mit einer funktionellen Gruppe umfasst, die aus der Gruppe ausgewählt ist, bestehend aus Carboxylgruppen, Säurechloridgruppen, Hydroxylgruppen, primären Aminogruppen, Halogengruppen, Epoxygruppen, Isocyanatgruppen und beliebigen Kombinationen von zwei oder mehreren der vorstehend genannten funktionellen Gruppen, wobei die eine oder mehreren Photoinitiatorverbindungen vorzugsweise aus der Gruppe ausgewählt sind, bestehend aus Benzophenonen und Thioxanthonen, die mit einer vorstehend genannten funktionellen Gruppe funktionalisiert sind.

14. Polymer nach einem der vorstehenden Ansprüche, das eines oder mehrere der nachfolgenden Kriterien erfüllt:
i) weist ein gewichtsgemitteltes Molekulargewicht, gemessen durch Gelpermeationschromatographie, von 600 bis 50.000 g/mol, vorzugsweise von 800 bis 25.000 g/mol und noch bevorzugter von 1.000 bis 20.000 g/mol auf,
ii) weist ein zahlengemitteltes Molekulargewicht, gemessen durch Gelpermeationschromatographie, von 100 bis 30.000 g/mol, vorzugsweise von 500 bis 20.000 g/mol und noch bevorzugter von 700 bis 10.000 g/mol auf,
iii) weist eine Säurezahl von 0 bis 50 mg KOH/g, vorzugsweise von 0 bis 20 mg KOH/g und noch bevorzugter von 1 bis 10 mg KOH/g auf,
iv) weist eine Aminzahl von 0 bis 100 mg KOH/g, vorzugsweise von 0 bis 50 mg KOH/g und besonders bevorzugt von 2 bis 20 mg KOH/g auf
v) weist einen Erweichungspunkt von 40 bis 200 °C, vorzugsweise von 70 bis 160 °C und noch bevorzugter von 80 bis 150 °C auf,
vi) weist bei Verdünnung mit 50 % dreifach ethoxyliertem 1,1,1-Trimethylolpropantriacrylat eine Viskosität von 1 bis 300 Pa s, vorzugsweise von 10 bis 200 Pa s und besonders bevorzugt von 50 bis 150 Pa s auf, wobei das gewichtsgemittelte Molekulargewicht, das zahlengemittelte Molekulargewicht, die Säurezahl, die Aminzahl, der Erweichungspunkt und die Viskosität nach den in der Beschreibung offenbarten Verfahren bestimmt werden.

15. Verfahren zur Herstellung eines Polymers nach einem der vorstehenden Ansprüche, umfassend die folgenden Schritte:
a) Reagieren von ai) mindestens einer Verbindung, die ausgewählt ist aus der Gruppe, bestehend aus Polyhydroxy-funktionalisierten Verbindungen, Polyepoxy-funktionalisierten Verbindungen, Polythiol-funktionalisierten Verbindungen, Verbindungen, die mindestens eine Gruppe umfassen, die ausgewählt ist aus Hydroxygruppen, Epoxygruppen und Thiolgruppen und mindestens eine andere Gruppe, die aus Hydroxygruppen, Epoxygruppen und Thiolgruppen ausgewählt ist, und beliebigen Kombinationen von zwei oder mehreren davon mit as) mindestens einer α, β-ungesättigten Carbonsäure, die zwei oder mehrere Carboxylgruppen umfasst, und/oder mindestens einem Anhydrid davon, sodass ein erstes Reaktionsprodukt erhalten wird,
b) Reagieren von b₁) dem ersten Reaktionsprodukt mit b₂) mindestens einer Kolophoniumsäure mit mindestens zwei konjugierten Doppelbindungen, um ein zweites Reaktionsprodukt zu erhalten,
c) Reagieren von c₁) dem zweiten Reaktionsprodukt mit c₂) mindestens einer Aminverbindung, die zwei oder mehr primäre und/oder sekundäre Amingruppen umfasst, um ein drittes Reaktionsprodukt zu erhalten,
d) Reagieren von d₁) dem dritten Reaktionsprodukt mit d₂) mindestens einer Epoxidverbindung, um das Polymer zu erhalten,
sodass das Polymer keine endständige Kohlenstoff-Kohlenstoff-Doppelbindung enthält.

16. Druckfarbe, umfassend:
- 1 bis 50 Gew.-% eines Polymers nach einem der Ansprüche 1 bis 14,
- 10 bis 60 Gew.-% Bindemittel, vorzugsweise ausgewählt aus der Gruppe, bestehend aus (Meth)acrylatmonomeren, -oligomeren und deren Mischungen, wie beispielsweise Polyesteracrylate, Polyetheracrylate und Polyurethanacrylate,
- 0 bis 40 Gew.-% Lösungsmittel, vorzugsweise ausgewählt aus der Gruppe, bestehend aus Wasser, Kohlenwasserstoffen, Ethern, Estern, Ketonen und deren Mischungen,
- 0 bis 40 Gew.-% Pigment, vorzugsweise ausgewählt aus der Gruppe, die aus Azopigmenten, Ruß, Titandioxiden und deren Mischungen besteht,
- 0 bis 20 Gew.-% eines oder mehrerer Füllstoffe, vorzugsweise ausgewählt aus der Gruppe der Silikate, Talkum und deren Mischungen,
- 0 bis 10 Gew.-% eines oder mehrerer Zusatzstoffe, wie Stabilisatoren, Verlaufsmittel und Fließhilfsmittel und
- 0 bis 10 Gew.-% eines oder mehrerer Photoinitiatoren und/oder CoInitiatoren.

17. Beschichtung, umfassend:
- 1 bis 50 Gew.-% eines Polymers nach einem der Ansprüche 1 bis 14,
- 10 bis 70 Gew.-% Bindemittel, vorzugsweise ausgewählt aus der Gruppe, bestehend aus (Meth)acrylatmonomeren, -oligomeren und deren Mischungen, wie beispielsweise Polyesteracrylate, Polyetheracrylate und Polyurethanacrylate,
- 0 bis 40 Gew.-% Lösungsmittel, vorzugsweise ausgewählt aus der Gruppe, bestehend aus Wasser, Kohlenwasserstoffen, Ethern, Estern, Ketonen und deren Mischungen,
- 0 bis 30 Gew.-% Pigment und Füllstoff, vorzugsweise ausgewählt aus der Gruppe, bestehend aus Azopigmenten, Ruß, Titandioxid, Silikaten und deren Mischungen,
- 0 bis 10 Gew.-% eines oder mehrerer Zusatzstoffe und
- 0 bis 10 Gew.-% eines oder mehrerer Photoinitiatoren und/oder CoInitiatoren.

## Revendications

1. Polymère pouvant être obtenu par un procédé comprenant les étapes suivantes :
a) faire réagir a₁) au moins un composé choisi dans le groupe constitué de composés à fonctionnalité polyhydroxy, composés à fonctionnalité polyépoxy, composés à fonctionnalité polythiol, composés comprenant au moins un groupe choisi parmi groupes hydroxy, groupes époxy et groupes thiol et au moins un groupe différent choisi parmi groupes hydroxy, groupes époxy et groupes thiol et des combinaisons arbitraires de deux de ceux-ci ou plus avec a₂) au moins un acide carboxylique α,β-insaturé comprenant deux groupes carboxyliques ou plus et/ou au moins un anhydride de celui-ci, de manière à obtenir un premier produit de réaction,
b) faire réagir b₁) le premier produit de réaction avec b₂) au moins un acide résinique contenant au moins deux doubles liaisons conjuguées, de manière à obtenir un deuxième produit de réaction,
c) faire réagir c₁) le deuxième produit de réaction avec c₂) au moins un composé amine comprenant deux groupes amine primaire et/ou secondaire, ou plus, de manière à obtenir un troisième produit de réaction,
d) faire réagir d₁) le troisième produit de réaction avec d₂) au moins un composé époxy, de manière à obtenir le polymère,
dans lequel le polymère ne contient aucun groupe vinylique terminal, ne contient aucun groupe acrylique terminal et ne contient aucun groupe méthacrylique terminal.

2. Polymère selon la revendication 1, dans lequel le polymère ne contient aucune double liaison carbone-carbone terminale.

3. Polymère selon la revendication 1 ou 2, dans lequel l'au moins un composé à fonctionnalité polyhydroxy a₁) est choisi dans le groupe constitué de 1,2,4-butanetriol, 1,2,6-hexanetriol, 3-méthyl-pentane-1,3,5-triol, diglycérol, dipentaérythritol, di-triméthylolpropane, érythritol, fucitol, galactitol, glycérol, hydroxyméthylhexanediol, iditol, inositol, lactitol, maltitol, maltotétraitol, maltotriitol, mannitol, pentaérythritol, polyglycitol, ribitol, thréitol, arabitol, triméthylolbutane, triméthyloléthane, triméthylolhexane, triméthyloloctane, triméthylolpropane, tripentaérythritol, volémitol, tris(2-hydroxyéthyl)isocyanurate, néopentylglycol, éthylène glycol, diéthylène glycol, propylène glycol, méthylpropanediol, polyols de polyéthers, polyols ramifiés éthoxylés ou propoxylés et combinaisons arbitraires de deux des composés susmentionnés ou plus.

4. Polymère selon l'une quelconque des revendications précédentes, dans lequel l'au moins un composé à fonctionnalité polyépoxy a₁) est choisi dans le groupe constitué de polyglycidyléthers, diglycidyléthers de bisphénol A, diglycidyléthers de bisphénol F, 3,4-époxycyclohexylméthyle-3',4'-époxy-cyclohexane carboxylates, novolaques époxyphénoliques, diglycidyléthers de 1,4-butanediol, diglycidyléthers de néopentylglycol, glycidyléthers de 2-éthylhexyle, diglycidyléthers de 1,6-hexanediol, diglycidyléthers de polyoxypropylèneglycol, polyglycidyléthers de triméthylolpropane, diglycidyléthers de poly(oxyde de tétraméthylène), glycidyléthers en C₁₂₋₁₄, glycidyléthers d'oxyde de polyéthylène en C₁₂₋₁₄, polyglycidyléthers de polyglycérol-3, polyglycidyléthers de glycérol, polyglycidyléthers de pentaérythrol, polyglycidyléthers de triméthylolpropane, polyglycidyléther de triméthylolpropanes éthoxylés, diglycidyléthers de bisphénol A hydratés, diglycidyléthers de bisphénol F hydratés, isocyanurates de triglycidyle, résines novolaques et combinaisons arbitraires de deux des composés à fonctionnalité polyépoxy susmentionnés, ou plus.

5. Polymère selon l'une quelconque des revendications précédentes, dans lequel l'au moins un composé à fonctionnalité polythiol est choisi dans le groupe constitué de tétrahydrothiophènes, 1,4-dithiènes, esters d'acide 3-mercaptopropionique, esters d'acide thioglycolique, esters d'acide 3-mercaptobutyrique, dithiols, trithiols et combinaisons arbitraires de deux des composés polythiol susmentionnés, ou plus.

6. Polymère selon la revendication 5, dans lequel l'au moins un composé à fonctionnalité polythiol est choisi dans le groupe constitué de 3,4-dimercaptotétrahydrothiophène, 3,4-di-(mercaptométhyl)tétrahydrothiophène, 3,4-di(mercaptoéthylthio)tétrahydrothiophène, 3,4-di-(mercaptoéthylthiométhyl)tétrahydrothiophène, 2,5-di(mercaptométhyl)tétrahydrothiophène, 2,5-di-(mercaptoéthylthiométhyl)tétrahydrothiophène, 2,3-dimercaptométhyl-1,4-dithiane, 2,5-dimercaptométhyl-1,4-dithiane, 2,3-di-(mercaptoéthylthiométhyl)-1,4-dithiane, 2,5-di-(mercaptoéthylthiométhyl)-1,4-dithiane, 2,5-di-(mercaptopropylthiométhyl)-1,4-dithiane, 2,3-di-(mercaptoéthylthioéthyl)-1,4-dithiane, esters d'acide 3-mercaptopropionique avec les polyols 1,2,4-butanetriol, 1,2,6-hexanetriol, 3-méthyl-pentane-1,3,5-triol, diglycérol, dipentaérythritol, di-triméthylolpropane, érythritol, fucitol, galactitol, glycérol, hydroxyméthylhexanediol, iditol, inositol, lactitol, maltitol, maltotétraitol, maltotriitol, mannitol, pentaérythritol, polyglycitol, ribitol, thréitol, arabitol, triméthylolbutane, triméthyloléthane, triméthylolhexane, triméthyloloctane, triméthylolpropane, tripentaérythritol, volémitol, tris-(2-hydroxyéthyl)isocyanurate, néopentylglycol, éthylène glycol, diéthylène glycol, propylène glycol, méthylpropanediol, polyols de polyéther, polyols ramifiés éthoxylés ou propoxylés ; esters d'acide thioglycolique avec les polyols 1,2,4-butanetriol, 1,2,6-hexanetriol, 3-méthyl-pentane-1,3,5-triol, diglycérol, dipentaérythritol, di-triméthylolpropane, érythritol, fucitol, galactitol, glycérol, hydroxyméthylhexanediol, iditol, inositol, lactitol, maltitol, maltotétraitol, maltotriitol, mannitol, pentaérythritol, polyglycitol, ribitol, thréitol, arabitol, triméthylolbutane, triméthyloléthane, triméthylolhexane, triméthyloloctane, triméthylolpropane, tripentaérythritol, volémitol, tris-(2-hydroxyéthyl)isocyanurate, néopentylglycol, éthylène glycol, diéthylène glycol, propylène glycol, méthylpropanediol, polyéthers de polyols, polyols ramifiés éthoxylés ou propoxylés ; esters d'acide 3-mercaptopropionique avec les polyols 1,2,4-butanetriol, 1,2,6-hexanetriol, 3-méthyl-pentane-1,3,5-triol, di-glycérol, dipentaérythritol, di-triméthylolpropane, érythritol, fucitol, galactitol, glycérol, hydroxyméthylhexanediol, iditol, inositol, lactitol, maltitol, maltotétraitol, maltotriitol, mannitol, pentaérythritol, polyglycitol, ribitol, thréitol, arabitol, triméthylolbutane, triméthyloléthane, triméthylolhexane, triméthyloloctane, triméthylolpropane, tripentaérythritol, volémitol, tris(2-hydroxyéthyl)isocyanurate, néopentylglycol, éthylène glycol, diéthylène glycol, propylène glycol, méthylpropanediol, polyols de polyéthers, polyols ramifiés éthoxylés ou propoxylés ; 1,2-éthanedithiol, 1,2-propanedithiol, 1,3-propanedithiol, 1,4-butanedithiol, 1,6-hexanedithiol, 1,7-heptanedithiol, 1,8-octanedithiol, 1,9-nonanedithiol, 1,10-décanedithiol, 1,12-dodécanedithiol, 2,2-diméthyl-1,3-propanedithiol, 3-méthyl-1,5-pentanedithiol, 2-méthyl-1,8-octanedithiol, 1,4-cyclohexanedithiol, 1,4-bis(mercaptométhyl)cyclohexane, 1,1-cyclohexanedithiol, 1,2-cyclohexanedithiol, bicyclo[2,2,1]heptexo-cis-2,3-dithiol, 1,1-bis(mercaptométhyl)cyclohexane, bis(2-mercaptoéthyl)éther, 1,4-dithioérythritol, 1,1,1-tris(mercaptométhyl)éthane, 2-éthyl-2-mercaptométhyl-1,3-propanedithiol, 1,2,3-propanetrithiol et combinaisons arbitraires de deux des composés polythiols susmentionnés, ou plus.

7. Polymère selon l'une quelconque des revendications précédentes, dans lequel l'au moins un acide carboxylique α,β-insaturé comprenant deux groupes carboxyliques a₂) ou plus est choisi dans le groupe constitué d'acide maléique, acide fumarique, acide acétylènedicarboxylique, acide glutaconique, acide traumatique, acide muconique, acide glutinique, acide citraconique, acide mésaconique, acide itaconique et combinaisons arbitraires de deux des acides carboxyliques susmentionnés, ou plus.

8. Polymère selon l'une quelconque des revendications précédentes, dans lequel l'au moins un anhydride a₂) est un anhydride d'un acide carboxylique α,β-insaturé choisi dans le groupe constitué d'acide maléique, acide fumarique, acide acétylènedicarboxylique, acide glutaconique, acide traumatique, acide muconique, acide glutinique, acide citraconique, acide mésaconique, acide itaconique et combinaisons arbitraires de deux des acides carboxyliques susmentionnés, ou plus.

9. Polymère selon l'une quelconque des revendications précédentes, dans lequel l'au moins un acide résinique b₂) est choisi dans le groupe constitué d'acide pimarique, acide néoabiétique, acide palustrique, acide abiétique, acide lévopimarique et combinaisons arbitraires de deux des acides carboxyliques susmentionnés, ou plus.

10. Polymère selon l'une quelconque des revendications précédentes, dans lequel l'au moins un composé amine comprenant deux groupes amine primaire et/ou secondaire, ou plus, c₂), est choisi dans le groupe constitué de diamines aromatiques, aliphatiques ou cycloaliphatiques, polyamines alcoxylées, polyamines, polyéthylèneimines, polyétheramines, polyesteramines, polyamidoamines, polyuréamines et combinaisons arbitraires de deux des composés susmentionnés, ou plus.

11. Polymère selon l'une quelconque des revendications précédentes, dans lequel l'au moins un composé époxy d₂) est choisi dans le groupe constitué de composés époxy polyéther, composés éther de glycidyle, composés ester de glycidyle, huiles végétales époxydées, résines novolaques phénoliques, résines novolaques époxy phénoliques, résines époxy aromatiques, résines époxy aliphatiques et combinaisons arbitraires de deux des composés susmentionnés, ou plus.

12. Polymère selon l'une quelconque des revendications précédentes, dans lequel l'au moins un composé époxyde d₂) est choisi dans le groupe constitué d'huile de soja époxydée comprenant de préférence 4 à 6 groupes époxy, huile de ricin époxydée, huile de lin époxydée, acide vernolique, diglycidyléther de bisphénol A, diglycidyléther de bisphénol F, 3,4-époxycyclohexylméthyl-3',4'-époxy-cyclohexane carboxylate, novolaque époxyphénolique, di-glycidyléther de 1,4-butanediol, diglycidyléther de néopentylglycol, glycidyléther de 2-éthylhexyle, diglycidyléther de 1,6-hexanediol, diglycidyléther de polyoxypropylèneglycol, polyglycidyléther de triméthylolpropane, diglycidyléther de poly(oxyde de tétraméthylène), glycidyléther en C₁₂₋₁₄, glycidyléther d'oxyde de polyéthylène en C₁₂₋₁₄, polyglycidyléther de polyglycérol-3, polyglycidyléther de glycérol, polyglycidyléther de pentaérythrol, polyglycidyléther de triméthylolpropane, polyglycidyléther de triméthylolpropane éthoxylé, diglycidyléther de bisphénol A hydraté, diglycidyléther de bisphénol F hydraté, isocyanurate de triglycidyle et combinaisons arbitraires de deux des composés susmentionnés, ou plus.

13. Polymère selon l'une quelconque des revendications précédentes, dans lequel le composant a₂) de l'étape a) comprend également un ou plusieurs composés photo-initiateurs avec un groupe fonctionnel choisi dans le groupe constitué de groupes carboxyliques, groupes chlorure d'acide, groupes hydroxyle, groupes amino primaire, groupes halogène, groupes époxy, groupes isocyanate et combinaisons arbitraires de deux des groupes fonctionnels susmentionnés, ou plus, dans lequel, de préférence, le ou les composés photo-initiateurs sont choisis dans le groupe constitué de benzophénones et thioxanthones fonctionnalisées avec un groupe fonctionnel susmentionné.

14. Polymère selon l'une quelconque des revendications précédentes, qui répond à un ou plusieurs des critères suivants :
i) avoir une masse moléculaire moyenne en poids mesurée par chromatographie par perméation de gel de 600 à 50 000 g/mol, de préférence de 800 à 25 000 g/mol et plus préférablement de 1 000 à 20 000 g/mol,
ii) avoir une masse moléculaire moyenne en nombre mesurée par chromatographie par perméation de gel de 100 à 30 000 g/mol, de préférence de 500 à 20 000 g/mol et plus préférablement de 700 à 10 000 g/mol,
iii) avoir un indice d'acide de 0 à 50 mg KOH/g, de préférence de 0 à 20 mg KOH/g et plus préférablement de 1 à 10 mg KOH/g,
iv) avoir un indice d'amine de 0 à 100 mg KOH/g, de préférence de 0 à 50 mg KOH/g et plus préférablement de 2 à 20 mg KOH/g
v) avoir un point de ramollissement de 40 à 200 °C, de préférence de 70 à 160 °C et plus préférablement de 80 à 150 °C,
vi) avoir une viscosité, lorsqu'il est dilué dans 50 % de triacrylate de 1,1,1 triméthylolpropane éthoxylé trois fois, de 1 à 300 Pa·s, de préférence de 10 à 200 Pa·s et plus préférablement de 50 à 150 Pa·s, dans lequel la masse moléculaire moyenne en poids, la masse moléculaire moyenne en nombre, l'indice d'acide, l'indice d'amine, le point de ramollissement et la viscosité sont déterminés à l'aide des méthodes divulguées dans la description.

15. Procédé de production d'un polymère selon l'une quelconque des revendications précédentes, comprenant les étapes consistant à :
a) faire réagir a₁) au moins un composé choisi dans le groupe constitué de composés à fonctionnalité polyhydroxy, composés à fonctionnalité polyépoxy, composés à fonctionnalité polythiol, composés comprenant au moins un groupe choisi parmi groupes hydroxy, groupes époxy et groupes thiol et au moins un groupe différent choisi parmi groupes hydroxy, groupes époxy et groupes thiol et des combinaisons arbitraires de deux de ceux-ci ou plus avec a₂) au moins un acide carboxylique α,β-insaturé comprenant deux groupes carboxyliques ou plus et/ou au moins un anhydride de celui-ci, de manière à obtenir un premier produit de réaction,
b) faire réagir b₁) le premier produit de réaction avec b₂) au moins un acide résinique contenant au moins deux doubles liaisons conjuguées, de manière à obtenir un deuxième produit de réaction,
c) faire réagir c₁) le deuxième produit de réaction avec c₂) au moins un composé amine comprenant deux groupes amine primaire et/ou secondaire, ou plus, de manière à obtenir un troisième produit de réaction,
d) faire réagir d₁) le troisième produit de réaction avec d₂) au moins un composé époxy, de manière à obtenir le polymère,
de sorte que le polymère ne contient aucune double liaison carbone-carbone terminale.

16. Encre d'impression comprenant :
- 1 à 50 % en poids d'un polymère selon l'une quelconque des revendications 1 à 14,
- 10 à 60 % en poids de liant, de préférence choisi dans le groupe constitué de monomères et oligomères de (méth)acrylate et mélanges de ceux-ci, tels que des polyesteracrylates, polyétheracrylates et polyuréthaneacrylates,
- 0 à 40 % en poids de solvant, de préférence choisi dans le groupe constitué d'eau, hydrocarbures, éthers, esters, cétones et mélanges de ceux-ci,
- 0 à 40 % en poids de pigment, de préférence choisi dans le groupe constitué de pigments azoïques, noir de carbone, dioxydes de titane et mélanges de ceux-ci,
- 0 à 20 % en poids d'une ou plusieurs charges, de préférence choisies dans le groupe de silicates, talc et mélanges de ceux-ci,
- 0 à 10 % en poids d'un ou plusieurs additifs, tels que des stabilisateurs, agents de nivellement et additifs d'écoulement, et
- 0 à 10 % en poids d'un ou plusieurs photo-initiateurs et/ou co-initiateurs.

17. Revêtement comprenant :
- 1 à 50 % en poids de polymère selon l'une quelconque des revendications 1 à 14,
- 10 à 70 % en poids de liant, de préférence choisi dans le groupe constitué de monomères et oligomères de (méth)acrylate et mélanges de ceux-ci, tels que des polyesteracrylates, polyétheracrylates et polyuréthaneacrylates,
- 0 à 40 % en poids de solvant, de préférence choisi dans le groupe constitué d'eau, hydrocarbures, éthers, esters, cétones et mélanges de ceux-ci,
- 0 à 30 % en poids de pigment et de charge, de préférence choisis dans le groupe constitué de pigments azoïques, noir de carbone, dioxydes de titane et mélanges de ceux-ci,
- 0 à 10 % en poids d'un ou plusieurs additifs et
- 0 à 10 % en poids d'un ou plusieurs photo-initiateurs et/ou co-initiateurs.
